(19) Europäisches Patentamt
European Patent Office
Office européen des brevets

(11) **EP 4 209 998 A1**

(12) **EUROPEAN PATENT APPLICATION**

(43) Date of publication:
**12.07.2023 Bulletin 2023/28**

(21) Application number: **22150557.1**

(22) Date of filing: **07.01.2022**

(51) International Patent Classification (IPC):
**G06T 15/50** (2011.01)    **G06T 11/00** (2006.01)

(52) Cooperative Patent Classification (CPC):
**G06T 15/506; G06T 11/001**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **X-Rite Europe GmbH
8105 Regensdorf (CH)**

(72) Inventors:
• **Müller, Gero
8105 Regensdorf (CH)**
• **Rump, Martin
8105 Regensdorf (CH)**

(74) Representative: **Jonas, Hans-Hermann
X-Rite Europe GmbH
Althardstrasse 70
8105 Regensdorf (CH)**

(54)    **METHOD, COMPUTER AND COMPUTER PROGRAM FOR MODIFYING TEXTURE IMAGES**

(57)    A computer-implemented method of modifying a texture image (T) representing a texture of a coating is disclosed. The texture image comprises a plurality of pixels (P), each pixel having a pixel value ($T_P(x)$) in a color space and being associated with a surface position ($x1,x2$) on a surface (11) of the coating. The method comprises, for at least one pixel (P) in the texture image, the steps of defining a depth at which a virtual reflecting object is located below the surface of the coating at the surface position; for at least one component of the color space, determining an attenuation factor ($A^2(\overline{\iota},\overline{o},x)$) for light that has entered the coating through the surface as incident light and has been reflected at the virtual reflecting object to form reflected light, based on a simulation of light transport through the coating along said light path; and modifying the pixel value of the pixel to obtain a modified pixel value ($T_P'(x)$), using the attenuation factor.

FIG. 13

**Description**

TECHNICAL FIELD

The present invention relates to a computer-implemented method of modifying a texture image, to a computer device configured to carry out the method, and to a corresponding computer program product.

PRIOR ART

In many applications, computers are used to photo-realistically render and display a virtual object. The rendering operation aims at reproducing the visual impression of the object in an environment under defined illumination and viewing conditions. Said visual impression is referred to by persons of skill in the art as "appearance". Appearance may include color and texture, the term "texture" being understood to relate to spatial variations of appearance across the surface of the object. There may be various causes for the presence of texture in the appearance of an object. For instance, a surface of the object may have a geometrical microstructure, or the material from which the object is formed may be spatially heterogeneous.

Computer renderings of textured surfaces may be generated for a variety of purposes, and the required level of realism and accuracy may be very different between different applications. One application that requires highly accurate renderings is vehicle repair. When a vehicle body is repaired, the repair area must be repainted with a refinish paint. The color of the repair area should match the color of the rest of the vehicle as well as possible. However, in many cases, no suitable refinish paint is available, and a recipe for the refinish paint must first be developed. Development of the refinish paint recipe is typically done by a specialist called a "formulator". In a typical scenario, an employee in a body shop measures the appearance of a target coating on an existing vehicle that needs repair, using a suitable appearance capture device (e.g., an imaging spectrophotometers), and transmits the measured appearance data to the formulator. The formulator receives the appearance data and develops a recipe for a refinish paint that is expected to reproduce the appearance of the target coating. The recipe typically comprises a base formulation and one or more colorants. For developing the recipe, the formulator uses a formulation system with a database. The database stores recipes and associated appearance data of many reference coatings. Based on the appearance data of the reference coatings, the formulation system suggests a candidate recipe that is expected to reproduce the appearance of the target coating. For comparing the actual appearance of the target coating to the predicted appearance of a candidate coating that uses the candidate recipe, the two coatings may be visualized (i.e., rendered and displayed) side-by-side on a computer display. In order to enable a meaningful comparison, the renderings of the coatings should be as accurate as possible.

Specifically, the target coating may exhibit texture, and therefore the renderings of the target and candidate coatings should preferably also show texture. For instance, many vehicle paints contain effect pigments, such as metallic flakes. A coating formed from such a paint exhibits texture in the form of a sparkle effect. For rendering textured coatings, methods are known that include a two-step procedure. In a first step, color values of the coating are computed for the desired illumination and viewing angles, without considering texture. In a separate second step, texture data are superimposed onto the computed overall color to modify the color values. Examples of such methods are disclosed in US20070097119A1 and US20050128484A1.

Depending on the source of the texture data, this procedure may lead to a rendered appearance that differs from the real appearance of the coating. For instance, a coating may comprise a blue non-effect pigment (toner) in addition to an effect pigment in the form of metallic flakes. In reality, such a coating may locally exhibit a subtle green shade at the flake positions. Prior-art rendering methods may not be able to accurately reproduce such subtle color changes. This is true, in particular, if the texture data that are used for rendering the coating are provided as greyscale images, as available from some handheld imaging spectrophotometers. However, even if the texture data are provided as color images, they may not accurately reflect the above-mentioned subtle color changes. For instance, the texture data may have been obtained from measurements of reference coatings that comprise the effect pigment in a clear base material without toners, and these reference coatings may not exhibit the above-mentioned subtle color changes.

Similar problems also arise for coatings that comprise only toners if such coatings are applied to substrates that exhibit surface microstructures, i.e., a non-uniform surface topography.

SUMMARY OF THE INVENTION

It is an object of the present invention to provide a method that is able to accurately predict the texture of a coating even in cases where texture data are only available in greyscale or from a different source than from measurements on the actual coating.

This object is achieved by a method according to claim 1. Further embodiments of the invention are laid down in the dependent claims.

In a first aspect, the present invention provides a computer-implemented method of modifying a texture image, the texture image representing a texture of a coating, the texture image comprising a plurality of pixels, each pixel having a pixel value in a color space, each pixel being associated with a surface position on a surface of the coating, the method comprising, for at least one pixel in the texture image, the steps of:

a) defining a depth at which a virtual reflecting object is located below the surface of the coating at the surface position associated with the pixel;

b) for at least one coordinate of the color space, determining an attenuation factor for light that has entered the coating through the surface as incident light and has been reflected at the virtual reflecting object at said depth to form reflected light, the attenuation factor being indicative of attenuation of said light along a light path from the surface to the virtual reflecting object and, after reflection, from the virtual reflecting object to the surface, the attenuation factor being determined based on a simulation of light transport through the coating along said light path; and

c) modifying the pixel value of the pixel to obtain a modified pixel value, using the attenuation factor.

The present invention accounts for the possibility that reflecting objects such as effect pigment particles or a structured substrate may be present at different depths below a surface of a coating. As a consequence, light rays that enter the coating and are reflected at the reflecting objects have light paths with varying lengths and are attenuated along their light paths by different amounts. For instance, if a reflecting object is present in the coating near the surface of the coating, the light path will be shorter than if the reflecting object is located deeper below the surface. Accordingly, light that is reflected by a reflecting object near the surface will be less strongly attenuated than light that is reflected by a reflecting object that is located deeper below the surface. This may cause a color change if different spectral components are attenuated differently. In particular, if a toner is present in the coating, the determined attenuation factor will reflect the attenuation of the light along the light path due to absorption and/or scattering by the toner, which affects different spectral components differently. The invention is able to take all this into account by simulating light transport through the coating and modifying the texture image accordingly.

The color space is preferably a linear color space, e.g., based on an RGB color model. This significantly simplifies the required calculations and ensures that the results are meaningful. If the texture image is not provided in a linear color space (e.g., in a perceptual color space like CIELAB), it is preferred that the texture image is first transformed into a linear color space. The modified texture image may then be transformed back into the original color space.

The texture image may represent the texture of the coating for a predetermined direction of incident light and a predetermined direction of reflected light. The attenuation factor may be a product of a first attenuation factor and a second attenuation factor. The first attenuation factor may be indicative of attenuation of the incident light along a light path from the surface to the virtual reflecting object, the first attenuation factor depending on the direction of the incident light, and the second attenuation factor may be indicative of attenuation of the reflected light along a light path from the virtual reflecting object to the surface, the second attenuation factor depending on the direction of the reflected light.

The modified pixel value may be obtained by multiplying the unmodified pixel value with the attenuation factor, normalized by a normalization factor. In some embodiments, the normalization factor may be a reference attenuation factor that is indicative of attenuation of light along a light path from the surface to a virtual reflective reference object at a reference depth and, after reflection, from the virtual reflective reference object to the surface. The virtual reflective reference object may be a substrate on which the coating is disposed. However, the normalization factor may also be derived differently, e.g., based on an overall color of the coating that has been determined independently of the texture data. The normalization factor may include an adjustment of brightness such that the brightness of the pixel remains unchanged by the modification of the pixel value.

The method may comprise:

analyzing brightness of the unmodified pixel values in the texture image; and
based on the analysis of brightness, defining a surface position and/or depth at which the virtual reflecting object is located below the surface of the coating.

In other words, the brightness distribution in the texture image may be used to make assumptions on the locations of reflecting objects in the coating that is represented by the texture image, even if these locations are unknown.

In some embodiments, the depth of the virtual reflecting object may be determined based on the brightness analysis. In other embodiments, the depth of the virtual reflecting object may be assumed to be a predetermined constant depth, or the depth may be defined by a random selection according to a predetermined depth distribution.

In some embodiments, the coating may comprise effect pigment particles, and steps a) to c) are carried out for a plurality of pixels associated with surface positions at which effect pigment particles are expected to be located below the surface of the coating, each effect pigment particle representing a virtual reflecting object.

In other embodiments, the coating is present on a substrate having a non-uniform surface topography, a thickness of the coating varying with surface position, and steps a) to c) are carried out for a plurality of pixels associated with different surface positions, the substrate representing the virtual reflecting object.

As already discussed above, the coating may comprise at least one toner. The method may comprise a step of determining the unmodified texture image based on at least one measurement and/or based on a synthesis operation, wherein the measurement and/or synthesis operations do not take the presence of the at least one toner into account. Specifically, the unmodified texture image may have been determined based on at least one measurement of at least one reference coating, wherein the reference coating may comprise an effect pigment, but does not comprise the at least one toner. The presently proposed method then remedies this shortcoming by considering the presence of the toner during the simulation of light transport through the coating.

In a second aspect, the present invention provides a computer-implemented method of rendering a surface element of a coating, the method comprising:

computing a color value for the surface element, neglecting texture; and
superimposing texture data onto the color value, the texture data being based on a modified texture image as modified by the above-described modification method.

The method may further comprise displaying the rendered surface element on a display.

In a third aspect, the present invention provides a device for modifying a texture image, the device comprising a processor and a memory comprising program instructions configured to cause the processor to carry out the above-described modification method.

In a fourth aspect, the present invention provides a computer program product comprising program instructions which, when executed by a processor, cause the processor to carry out the above-described modification method. The computer program product may comprise a non-volatile computer-readable medium on which the program instructions are stored. The non-volatile medium may include a hard disk, a solid-state drive, a memory card or any other type of computer-readable medium, as it is well known in the art.

BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,

Fig. 1     shows a schematic illustration of a method of visualizing the appearances of two materials;
Fig. 2     shows a flow diagram illustrating the method of Fig. 1;
Fig. 3     shows a schematic hardware-oriented illustration of an exemplary color formulation system;
Fig. 4     shows a diagram illustrating an exemplary discrete color table;
Fig. 5     shows an exemplary texture of a discrete texture table;
Fig. 6     shows a diagram illustrating an exemplary discrete texture table;
Fig. 7     shows a schematic pixel value histogram;
Fig. 8     shows a schematic illustration of a method for generating a destination texture based on a plurality of source textures;
Fig. 9     shows a schematic illustration of the insertion of a texture patch into the destination texture;
Fig. 10    shows a flow diagram of a method for generating an instance of an appearance model;
Fig. 11    shows a flow diagram of a method for generating a destination texture based on a plurality of source textures; associated with different source coordinates;
Fig. 12    shows a flow diagram of a method for generating a destination texture based on a plurality of source textures associated with different constituents; and
Fig. 13    shows a sketch illustrating reflection at metallic flakes in a coating;
Fig. 14    shows a diagram illustrating a depth distribution;
Fig. 15    shows a sketch illustrating a method of modifying pixel values in a texture image;
Fig. 16    shows a sketch illustrating reflection at a substrate having a non-uniform surface topography;
Fig. 17    shows a flow diagram of a method for modifying a texture image; and
Fig. 18    shows a flow diagram of a method for rendering a virtual object using a modified texture image.

DESCRIPTION OF PREFERRED EMBODIMENTS

<u>Definitions</u>

In the present disclosure, references in the singular may also include the plural. Specifically, the word "a" or "an" may refer to one, or one or more, unless the context indicates otherwise.

The term "colorant" is to be understood as a constituent of a material that provides the appearance of color when light it reflected from it or transmitted through it. Colorants include pigments and dyes. A "pigment" is a colorant that is usually insoluble in a base constituent material. A pigment can be from natural or synthetic sources. A pigment can comprise organic and inorganic constituents. The term "pigment" also encompasses so-called "effect pigments", which produce special effects in a material. Examples include interference pigments and reflective particles or flakes. A pigment that is not an effect pigment is called a "toner", a "solid pigment" or briefly a "solid". A "dye" is a colorant that is usually soluble in a base constituent material.

The term "recipe" is to be understood as relating to a collection of information that determines how a material is to be prepared. The material may comprise a coating material, such as automotive paint, a solid material, such as plastic materials, a semi-solid material, such as gels, and combinations thereof. The recipe includes, in particular, the concentrations of the constituents of which the material is composed, such as a base and colorants. A material that has been prepared according to a recipe may also be called a "formulation".

The term "visual appearance" or briefly "appearance" is to be understood broadly as the way in which an object reflects and transmits light, including but not limited to, how individuals viewing the object perceive color and surface texture of the object in various viewing conditions. Appearance also includes instrumented measurements of how an object reflects and transmits light.

One aspect of visual appearance is color. The "color" of an object is determined by the parts of the spectrum of incident white light that are reflected or transmitted without being absorbed. The color of an object can be described by "color attributes". In general terms, color attributes are indicative of the spectral response of the object when it is illuminated by incident light. In the context of the present disclosure, the term "color attribute" is to be understood broadly as encompassing any form of data that is indicative of the spectral response of an object when it is illuminated by incident light. Color attributes can take the form of color values in an arbitrary color space, e.g. in a trichromatic color space like sRGB or CIEXYZ, or in any other color space like CIELAB (L*a*b*), or in the form of spectral data representative of a spectral response of a material to incident light, in arbitrary format. In the context of the present disclosure, color attributes may in particular include reflectance values and/or absorption and scattering coefficients of a material at a plurality of wavelengths. A "discrete color table" is to be understood as relating to a collection of sets of color attributes, each set of color attributes associated with a different combination of illumination and viewing directions.

Another aspect of visual appearance is texture. The term "texture" is to be broadly understood as referring to the spatial variation of appearance across the surface of the material, both on a microscopic or mesoscopic scale (i.e., on a scale on which individual structure elements can normally not be discerned by the naked eye) and on a macroscopic scale (i.e., on a scale on which individual structure elements can be discerned by the naked eye). Texture as understood in the present disclosure includes phenomena like coarseness, sparkle, and variations of surface topography. Texture can be described by "texture attributes". In the context of the present disclosure, the term "texture attributes" is to be understood broadly as encompassing any form of data that is able to quantify at least one aspect of texture. Examples of texture attributes include global texture attributes such as a global coarseness parameter or a global sparkle parameter. In some embodiments, texture attributes can include a normal map or a height map. In some embodiments, texture attributes can include image data. In some embodiments, the image data can be associated with particular combinations of illumination and viewing directions. In such embodiments, the texture attributes can comprise a plurality of sets of image data, each set of image data associated with a different combination of illumination and viewing directions. A "discrete texture table" is to be understood as relating to a collection of sets of texture attributes, preferably in the form of image data, each set of texture attributes associated with a different combination of illumination and viewing directions. In some embodiments of the present disclosure, images in a discrete texture table are generated from a set of source textures, and these images are accordingly called "destination textures".

The term "appearance model" is to be understood as relating to a formal construct that describes appearance in mathematical terms, using a plurality of material-dependent parameters called "appearance attributes". The appearance attributes may include color attributes and texture attributes. The appearance model is preferably device- and platform-independent, i.e., it is independent of a specific measurement device with which the appearance attributes might have been determined, and it is independent of a specific rendering platform for visualization. The appearance model offers a mathematical description of appearance in such a form and at such a level of completeness that it is possible to generate visualizations (i.e., render and display) of a virtual object under arbitrary illumination and viewing conditions, using the appearance model combined with a geometric model of the virtual object. For any portion of the surface of a virtual object whose geometry is defined by the geometric model and for any given illumination and viewing angle, an appearance model provides the necessary information to calculate appropriate appearance attributes.

A "virtual object" is an object that exists only virtually in a computer. A virtual object may or may not correspond to a real, tangible object. A virtual object may be defined mathematically by a geometric model and by associated appearance information.

A "geometric model" of a real or virtual object is to be understood as an at least approximate representation of the geometry of any surface of the object in three dimensions. For instance, in some embodiments, a geometric model defines curves along at least two mutually orthogonal directions. In other embodiments, a geometric model defines a plurality of polygons or facets. A geometric model may be represented, e.g., by a CAD file.

The expression "instance of an appearance model" is to be understood as relating to a set of values for all appearance attributes of a particular appearance model, supplemented by information that enables identification of the underlying appearance model. In other words, while an appearance model itself is a formal construct that defines how appearance is described in terms of a set of appearance attributes, an instance of an appearance model includes actual values of these appearance attributes particular to a given material, e.g., as determined by measurement and/or as derived from appearance attributes of individual constituents of a material. In particular, an instance of an appearance model may be provided in the form of a data file. Preferably the data file is in a device- and platform-independent format such as the AxF™ format proposed by X-Rite. An AxF file may therefore be considered a representation of an "instance" of an appearance model. However, the present disclosure is not limited to a particular format for the instance of the appearance model, and the instance of the appearance model may be provided in another file format, e.g., the MDL format, or it may even be provided in a different form than a file, e.g., as a data stream.

Brightness attributes may be represented in an appearance model with a bidirectional reflectance distribution function. A "bidirectional reflectance distribution function" (BRDF) is to be understood in the usual sense as a function that defines how light is reflected at an opaque surface dependent on illumination and viewing directions, providing the ratio of reflected radiance exiting along a viewing direction to the irradiance incident on the surface from an illumination direction. If the surface exhibits spatial variations of this ratio, the BRDF is understood as providing an average of the ratio over the surface area. A "monochromatic brightness BRDF" is a BRDF that provides a (possibly weighted) average of the ratio over all visible wavelengths, thus modeling the overall brightness variation of a surface.

"Image data" are data that represent an image. Images include images of actual target surfaces or objects and synthesized images derived from one or more geometric models combined with one or more sets of appearance attributes. An image can take the form of a two-dimensional array of picture elements ("pixels"), each pixel having a pixel value. The pixel value can be representative of reflectance at the location of the pixel at a particular wavelength, averaged over a particular wavelength range, or averaged over all visible wavelengths. Accordingly, in some embodiments, image data can be provided in the form of an array of pixel values. In other embodiments, image data can be provided in compressed form or in a transformed form. A "set of image data" is a data set that comprises or consists of image data for at least one image, i.e., a data set that represents one or more images.

An "appearance capture device" is a device that is able to determine one or more appearance attributes of an object. Depending on the appearance attributes to be determined, an appearance capture device can take the form of, e.g., a camera, a colorimeter, a spectrophotometer, or an imaging spectrophotometer.

A "spectrophotometer" is a device for determining the reflection and/or transmission properties of a surface or material as a function of wavelength, i.e., the spectral response of an object, under illumination with visible light. Different types of spectrophotometers are known, having different geometries and being optimized for different purposes. One important type is the "integrating sphere spectrophotometer". An integrating sphere spectrophotometer comprises an "integrating sphere", i.e., a hollow spherical cavity delimited by a diffusely reflective white inner surface, having at least one entrance port for illumination and at least one exit port for observation. The integrating sphere causes a uniform scattering or diffusing effect. Light rays incident on any point on the inner surface are, by multiple scattering reflections, distributed equally to all other points. The effects of the original direction of light are minimized. Examples of integrating sphere spectrophotometers are the models Ci7860 and Ci7500 of X-Rite. Other types of spectrophotometers determine spectral information for only a single narrow range of directions of illumination, e.g., at 45° to the surface normal, and a single narrow range of directions of observation, e.g., at 0° to the surface normal. Examples include the models 962 and 964 available from X-Rite. Yet other spectrophotometers, called "goniospectrophotometers" or "multi-angle spectrophotometers", are capable of determining spectral information for a plurality of combinations of different illumination and observation directions. An "imaging spectrophotometer" additionally has imaging capabilities, i.e., it can comprise one or more cameras to take one or more digital images of an object. Examples of multi-angle spectrophotometers with imaging capabilities include the benchtop model TAC7 or the handheld models MA-T6 or MA-T12 available from X-Rite.

A material may be transparent, translucent or opaque. A material is "transparent" if it allows light to pass through the material without appreciable absorption and scattering of light. A material is "translucent" if it allows light to pass through, but light may be scattered at either of the two interfaces or internally. A material is "opaque" if it does not transmit light. A material may be opaque only in some spectral regions while it is translucent or transparent in other spectral regions, and vice versa. For instance, a material may strongly absorb red light, being essentially opaque to red light, while only weakly absorbing blue light, being transparent for blue light. Some more complex materials, especially gonioapparent materials, may comprise a combination of transparent, translucent, and opaque materials. For example, a paint coating may include an opaque base layer and a transparent clear coat. Opaque (reflective or interference flakes) or translucent pigments may be included in opaque, transparent, or translucent layers of a paint coating.

For the purposes of the present disclosure, a material will broadly be considered "translucent" if a reasonably thin slice of the material transmits an appreciable fraction of incident radiant flux in at least one portion of the visible spectrum, e.g., if a slice having a thickness of 0.1 mm transmits at least 1% of the incident radiant flux in at least one portion of the visible spectrum. In this sense, the term "translucent" encompasses the term "transparent", i.e., for the purposes of the present disclosure, a transparent material is to be considered to be translucent as well. Examples of translucent materials in this sense include many common plastics materials on the basis of polymers, including but not limited to organic polymers like PET, PP, PE, PMMA, PS, PC, PVC, PTFE, Nylon, organic copolymers like styrene-butadiene copolymer, inorganic polymers like polysiloxane, and many natural polymers. A translucent plastics material can comprise pigments and additives. However, also other classes of materials can be translucent in the sense of the present disclosure, including, e.g., silicate glass or paper.

For the purposes of the present disclosure, a material is to be understood as "homogeneous" if its subsurface light transport properties do not vary on a macroscopic or mesoscopic scale, e.g., on a scale of more than 1 $\mu$m. In particular, a homogeneous material does not comprise mesoscopic or macroscopic gonioapparent objects like flakes.

The term "macroscopic surface geometry" is to be understood as relating to the overall geometry of a product, excluding microscopic or mesoscopic surface structure, i.e., excluding variations of the surface geometry on a microscopic or mesoscopic scale below, e.g., 1 mm. For instance, local variations of surface height of less than, e.g., 1 mm from a local average may be considered microscopic or mesoscopic surface structure, and accordingly the macroscopic surface geometry may be equated with the surface geometry after averaging over a length scale of at least 1 mm. A surface geometry is "continuously curved" if, in mathematical terms, it corresponds at least approximately and at least locally to a two-dimensional differentiable manifold in three-dimensional Euclidean space.

In contrast, the term "surface topography" or "surface microtopography" relates to microscopic or mesoscopic surface structures on a scale below, e.g., 1 mm.

The term "rendering" refers to the automatic process of generating a photorealistic image of a scene by means of a computer program. In the present disclosure, the scene comprises at least one virtual object. Input information for a rendering operation includes a 3D geometric model of the at least one virtual object, at least one set of appearance attributes associated with the virtual object, information about the position and orientation of the at least one virtual object in the scene, the lighting conditions (which may take the form of an environment map), and parameters that characterize the observer such as the viewpoint, focal length, field of view, depth of field, aspect ratio, and/or spectral sensitivity. The output of a rendering operation is an image of the scene, which includes an image of at least a portion of the virtual object. Many different rendering algorithms are known at different levels of sophistication, and software used for rendering may employ a number of different techniques to obtain a final image. Tracing every particle of light in a scene is often impractical, as it requires excessive computing time. Therefore, simplified techniques for modelling light transport are commonly used, such as ray tracing and path tracing...

The term "visualizing" encompasses rendering a scene comprising a virtual object and displaying the rendered scene. For displaying, a display device is used. The term "display device" or briefly "display" is to be understood as relating to an output device of a computer for presentation of information in visual form. A display device may take the form of a computer monitor, a TV screen, a projector, a VR headset, a screen of a handheld device such as a smartphone or tablet computer etc. The display device can be a touchscreen. In some embodiments, a display device can be a "virtual light booth" as disclosed in EP 3 163 358 A1 so as to provide a particularly realistic impression of a rendered scene.

The term "database" refers to an organized collection of data that can be accessed electronically by a computer system. In simple embodiments, the database can be a searchable electronic file in an arbitrary format. Examples include a Microsoft Excel™ spreadsheet or a searchable PDF document. In more sophisticated embodiments, a database can be a relational database that is maintained by a relational database management system using a language like SQL.

The term "computer" or "computing device" refers to any device that can be instructed to carry out sequences of arithmetic or logical operations automatically via a program. Without limitation, a computer can take the form of a desktop computer, a notebook computer, a tablet computer, a smartphone, a programmable digital signal processor etc. A computer generally includes at least one processor and at least one memory device. A computer may be a subunit of another device, such as an appearance capture device. A computer may configured to establish a wired or wireless connection to another computer, including a computer for querying a database. A computer can be configured to be coupled to a data input device like a keyboard or a computer mouse or to a data output device like a display or a printer via a wired or wireless connection.

A "computer system" is to be broadly understood as encompassing one or more computers. If the computer system comprises more than one computer, these computers do not necessarily need to be at the same location. The computers within a computer system may communicate with one another via wired or wireless connections.

A "processor" is an electronic circuit which performs operations on an external data source, in particular, a memory device.

A "memory device" or briefly "memory" is a device that is used to store information for use by the processor. The memory device may include volatile memory, as for random-access memory (RAM), and nonvolatile memory, as for read-only memory (ROM). In some embodiments, the memory device may include a non-volatile semiconductor memory device such as an (E)EPROM or a flash memory device, which may take the form of, e.g., a memory card or a solid-state disk. In some embodiments, the memory device may include a mass storage device having mechanical components, like a hard disk. The memory device can store a program for execution by the processor. A non-volatile memory device may also be called a non-volatile computer-readable medium.

A "program" is a collection of instructions that can be executed by processor to perform a specific task.

A "wired connection" is a connection via an electrical conductor. A wired connection can include one or more cables. A "wireless connection" is a connection that includes the electromagnetic transfer of information between two or more points that are not connected by an electrical conductor. Wireless connections include connections via WiFi™, Bluetooth™, 3G/4G/5G mobile networks, optical communications, infrared, etc.

Paint formulation for vehicle repair

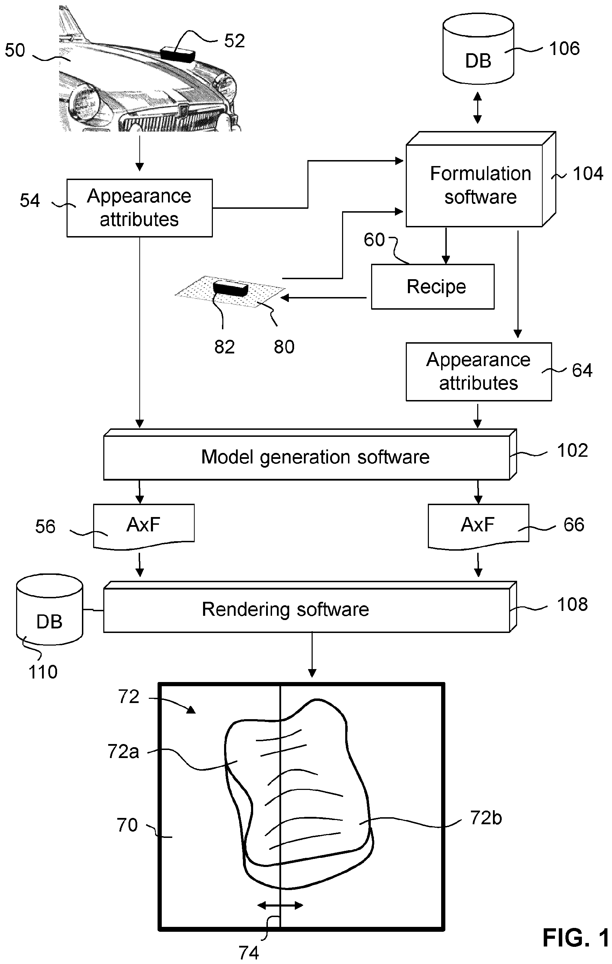

Figure 1 illustrates an exemplary embodiment of a method of paint formulation in vehicle repair.

Suppose that a damaged vehicle needs to be repaired in a body shop. The vehicle may have a paint coating that comprises effect pigments, e.g., metallic flakes, causing a strongly gonioapparent sparkle effect. For each combination of illumination and viewing directions, this sparkle effect may be described as a "texture" of the paint coating, i.e., as a spatial variation of appearance across the surface of the object. As the original paint may not be available, it is desired to find a paint recipe that is able to reproduce the appearance of the existing paint coating, including texture.

To this end, a technician at the body shop uses a hand-held appearance capture device 52 to determine a set of appearance attributes 54 of a target coating 50 on an intact vehicle part. The appearance attributes 54 of the target coating comprise, on the one hand, color attributes in the form of spectral data for a plurality of pairs of illumination and viewing directions and, on the other hand, texture attributes in the form of image data for a plurality of (possibly different) pairs of illumination and viewing directions.

The appearance capture device 52 transmits the measured appearance attributes 54 to a computer system. The computer system may comprise a local client computer at the premises of the body shop. The computer system may further comprise one or more remote computers at one or more different locations than the body shop. The local client computer may be, e.g., a mobile electronic device, such as a notebook computer or tablet computer. The remote computers may act as servers for the local client computer at the body shop.

The computer system executes several elements of software. In a first aspect, the computer system executes model generation software 102. The model generation software 102 generates a first instance 56 of a selected formal appearance model, based on the measured appearance attributes 54, the first instance 56 representing the appearance of the target coating 50. The first instance of the appearance model is stored in a first AxF file in a device- and platform-independent form.

In a second aspect, the computer system executes color formulation software 104. The color formulation software 104 determines one or more candidate recipes 60 from a database of reference recipes. Each candidate recipe defines a candidate paint coating whose appearance attributes are likely to match the measured appearance attributes 54 of the target coating 50, the candidate recipe comprising one or more colorants in a base formulation. For determining the candidate recipes, the formulation software 104 retrieves predetermined appearance attributes associated with different reference coatings from a database 106.

The database 106 may comprise two sub-databases: a colorant database that stores appearance attributes associated with individual colorants, and a recipe database that stores appearance attributes associated with reference recipes. The appearance attributes in database 106 may have been determined beforehand by carrying out measurements on reference objects comprising reference coatings made according to the reference recipes or comprising the constituents of the reference recipes.

For determining the appearance attributes in the colorant database, drawdowns (a.k.a. calibration panels) coated with reference coatings comprising a single colorant at different concentrations may be prepared and measured. Normally, these reference coatings are prepared using a clear base formula plus the pigment of interest, possibly augmented by white pigment (such as titanium dioxide).

On the other hand, for determining the appearance attributes in the recipe database, drawdowns coated with reference coatings according to the reference recipes may be prepared and measured.

The formulation software uses the predetermined appearance attributes retrieved from database 106 to compute candidate recipes whose associated appearance attributes are expected to be "close" to the measured appearance attributes of the target coating 50. The appearance attributes of a candidate recipe are "close" to the measured appearance attributes of the target coating 50 if an appearance difference between the appearance attributes of the candidate recipe and the measured appearance attributes are small according to some predefined difference norm. In other words, the formulation software carries out a minimization algorithm for determining candidate recipes that are near a minimum of the difference norm. The formulation software 104 outputs one or more of the thus-determined candidate recipes 60. The technician selects and optionally manually modifies one of the candidate recipes. The formulation software 104 provides a set of candidate appearance attributes 64 for the selected (and optionally modified) candidate recipe 60.

Sometimes, a perfect match is found in the recipe database, and the candidate recipe will then be the recipe of the corresponding reference coating. However, more often, the candidate recipe will need to be calculated from appearance attributes associated with multiple reference coatings, including appearance attributes in the colorant database.

The model generation software 102 receives the candidate appearance attributes 64 and generates a second instance 66 of the appearance model, representing the expected appearance of a paint coating that has been prepared according to the candidate recipe 60 ("candidate coating"). The second instance 66 of the appearance model is stored in a second AxF file.

In a third aspect, the computer system executes rendering software 108. The rendering software renders a virtual object 72, i.e., it creates a photorealistic digital image of the virtual object 72 based on a geometric model of the surface geometric of the virtual object 72, at least one instance of an appearance model, and illumination and viewing conditions. The rendered virtual object 72 is displayed in a scene on a display 70. The geometric model may define a continuous three-dimensional macroscopic surface geometry having surface normals that are distributed over a comparatively large solid angle, i.e., it may comprise curved or rectilinear surface portions that have directions perpendicular to the surface portions pointing into many different directions. The rendering software generates a two-dimensional image of the virtual object 72 in a particular orientation and under particular illumination conditions, assuming particular viewing conditions. Surface geometry, orientation and illumination conditions may be chosen in such a manner that the rendered image gives a good impression of the appearance of the virtual object for a large range of angles between the surface normal, the illumination direction and the viewing direction, respectively, so as to allow an observer to assess the appearance of the rendered virtual object 72 for a large range of these directions simultaneously.

The virtual object 72 may have first and second portions 72a, 72b that are adjacent to each other. The first portion 72a may be rendered using the first instance 56 of the appearance model, while the second portion 72b may be rendered using the second instance 66 of the appearance model. A virtual separating line 74 may be visualized between the first and second portions 72a, 72b. The first and second portions 72a, 72b appear to meet at the virtual separating line 74.

The display 70 may be located at the body shop. For instance, the display 70 may be a touchscreen display of the local client computer at the body shop. The technician at the body shop can move the virtual line 74 across the display 70 using his finger or using a pointing device like a digital pen, a trackpad or a mouse and observe how appearance matches or differs between the first and second instances of the appearance model as rendered on the virtual object 72, i.e., between the appearance of the actual paint coating of the car as measured and the expected appearance of a candidate coating that has been prepared according to the candidate recipe. Optionally, the technician can change the shape of the virtual object, rotate the virtual object in space, simultaneously changing illumination and viewing angles. Optionally, the technician can change the illumination conditions, including illumination directions and choice of illuminants.

In some embodiments, the virtual object 72 may have the shape of an actual part of the damaged car. To this end, the rendering software 108 may retrieve a three-dimensional geometric model corresponding to the geometry of the car part from a suitable memory, for instance, from a database 110 that stores geometric data of a plurality of car parts. To this end, the technician can provide, e.g., manufacturer and model of the damaged car or another type of vehicle information, such as a unique Vehicle Identification Number, along with one or more components to be rendered as virtual objects 72.

In other embodiments, the rendered virtual object 72 is a three-dimensional object that is different from an actual car part of a car to be repaired, but has a three-dimensional shape useful for inspecting appearance characteristics of various materials. Also in such embodiments, the rendering software 108 may retrieve a three-dimensional geometric model of the virtual object from a memory, e.g., from the database 110. Regardless of whether or not the virtual object 72 represents an actual car part, the virtual object 72 preferably allows for an inspection of color and texture differences for a large number of angles between the surface normal, the illumination direction and the viewing direction simultaneously.

The appearance of the first portion 72a of the rendered virtual object, when viewed on the display 70, does not need to perfectly match the appearance of the actual target object 50. In particular, the display 70 does not need to be calibrated. What matters is that the appearances of the first and second portions 72a, 72b are directly comparable to each other, both in color and in texture. This is possible even if the colors on the display are not true colors.

It should further be noted that neither the appearance model itself nor the rendering software need to be perfect in order to ensure direct comparability. It suffices that the appearance model and the rendering software enable a reasonably realistic judgement of differences between the two instances representing the target coating 50 and the candidate coating according to the candidate recipe 60.

If the visual comparison of the first and second portions 72a, 72b shows that the match is not yet satisfactory, the technician can modify the candidate recipe 60 in the formulation software 104 by selecting a different candidate recipe or by modifying the previously selected candidate recipe. The formulation software 104 provides the appearance attributes of the modified candidate recipe to the model generation software 102, which creates a modified second instance of the appearance model based on these attributes. The rendering software 108 can be instructed to render the second portion of the virtual object using the modified second instance of the appearance model, thereby replacing the previously candidate recipe in the visualization by the modified recipe, or the rendering software can be instructed to split the virtual object into three portions so as to visualize the reference material together with both candidate recipes, adding another movable separating line in the visualization ("recursive splitter control").

When a satisfactory match has been obtained, an actual trial object 80, e.g., a drawdown, may be produced for a selected candidate recipe 60. Appearance attributes of the trial object 80 may be determined using an appearance capture device 82. The appearance attributes of the trial object 80 may be compared to those of the target object 50 in order to determine whether the match is objectively within tolerances. This may be done by evaluating a suitable difference norm between the measured appearance attributes of the trial object 80 and those of the target object 50. In addition or in the alternative, a third instance of the appearance model may be generated, using the appearance attributes of the trial object 80, and the target material and the trial material may be visualized side-by-side on the display 70, using the associated instances of the appearance model. Of course, it is also possible to directly compare the physical trial object 80 to the physical target object 50 if both objects are located at the same location. If the match is not yet within tolerances, the formulation software 104 may further modify the candidate recipe 60 by considering the differences between the predicted appearance attributes of the candidate recipe 60 to those that have been actually determined for the trial object 80.

The trial object 80 may be produced by the technician in the body shop. However, most often the trial object 80 will be produced by a paint supplier at a location that is remote from the body shop. Therefore, the appearance capture device 82 for determining the appearance attributes of the trial object 80 may be different from the appearance capture device 52 that was used for determining the appearance attributes of the target coating 50.

In the above embodiment it was assumed the technician at the body shop not only operates the appearance capture device 52 to determine the set of appearance attributes 54 of the target coating 50, but that the same person also operates the formulation software 104 to define one or more candidate recipes and compares the first and second portions 72a, 72b of the virtual object 72 using the display 70. However, these tasks may as well be divided among different persons working at different locations. For instance, the technician at the body shop may transmit the appearance attributes 54 to a remote paint supplier, and a paint specialist at the paint supplier may define a candidate recipe using the formulation software 104 and may compare the different portions of the virtual object to determine whether the expected match is satisfactory. Accordingly, the computer system may comprise at least one computer under the control of the paint supplier, e.g., a computer executing the formulation software 104, the model generation software 102, and the rendering software 108. Many other possibilities exist for the division of tasks among different entities involved in the process. It will thus be apparent to a skilled person that the computer system may comprise several computers which may be located at different locations and which may be under the control of different entities, these computers communicating via wireless or wired data communication connections.

Other possible ways of visualizing objects using the instances of the appearance model

In alternative embodiments, the instances of the appearance model may be used to visualize other scenes than a scene that comprises only a single virtual object having two or more portions that are visualized using different instances of the appearance model. For instance, a scene comprising two or more identical or different virtual objects may be visualized, each of the virtual objects being visualized using a different instance of the appearance model. In general terms, the scene comprises one or more virtual objects, and different portions of the scene are visualized using different instances of the appearance model. For instance, two identically shaped objects (e.g., two identically shaped vehicle parts like rearview mirrors) may be visualized side by side using first and second instances of the appearance model combined with a common geometric model.

Flow diagram

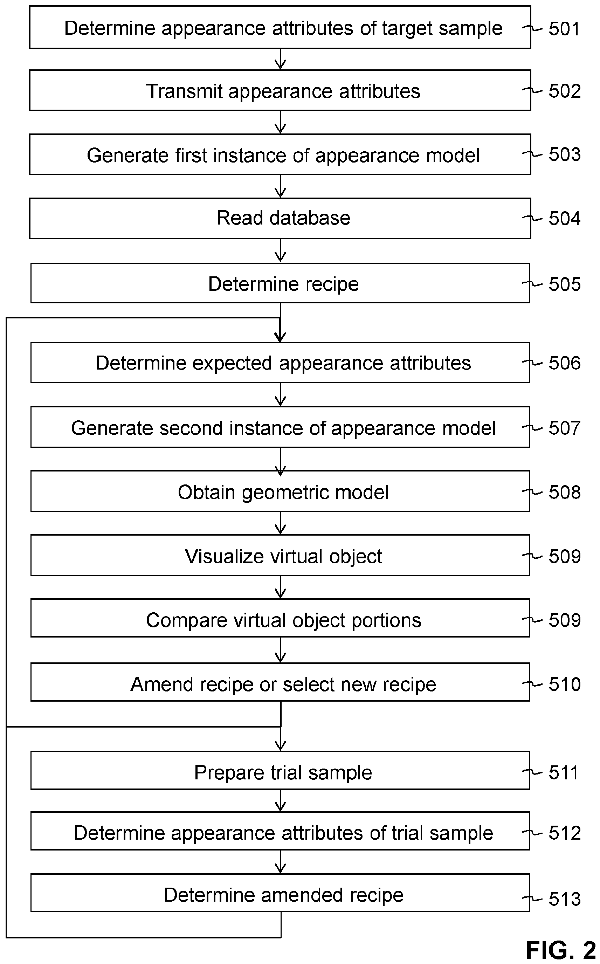

Figure 2 shows an exemplary flow diagram illustrating the method of visualizing the appearances of two materials. In step 501, a user (e.g., a technician at the body shop) determines appearance attributes 54 of a target coating 50 by measuring light reflectance properties of the target coating with a first appearance capture device 52. In step 502, the appearance capture device 52 transmits these measured appearance attributes to a component of a computer system, e.g., to a handheld computer in the body shop. In step 503, the computer system generates a first instance 56 of an appearance model from the measured appearance attributes, using model generation software 102. In step 504, the computer system reads appearance attributes of one or more reference materials from a database 106. In step 505, the computer system determines one or more candidate recipes 60, using formulation software 104. In step 506, the computer system determines appearance attributes 64 associated with the candidate recipe 60, using the formulation software 104. In step 507, the computer system generates a second instance 66 of the appearance model from the appearance attributes 64 associated with the candidate recipe 60, using the model generation software 102. In step 508, the computer system visualizes the virtual object 72, using rendering software 108, based on the two instances 56, 66 of the appearance model, a geometric model of the virtual object 72, and illumination and viewing conditions. In step 509, the user compares rendered virtual object portions 72a, 72b, for acceptable appearance match. In step 510, the user may amend the recipe or select a different candidate recipe 60 if the visualized virtual object portions 72a, 72b do not provide an acceptable visualized match. Once an acceptable rendered match is obtained, in step 511, the user prepares the trial object 80 using the candidate recipe. In step 512, the same or a different user determines the appearance attributes of the trial object 80 using the second appearance capture device 82. In step 513, the appearance attributes of the trial object 80 are transmitted to the computer system, and the computer system determines an amended recipe, if necessary to refine the match, using the formulation software 104. Steps 506 to 513 can then be repeated for the amended recipe.

Computer system: exemplary hardware

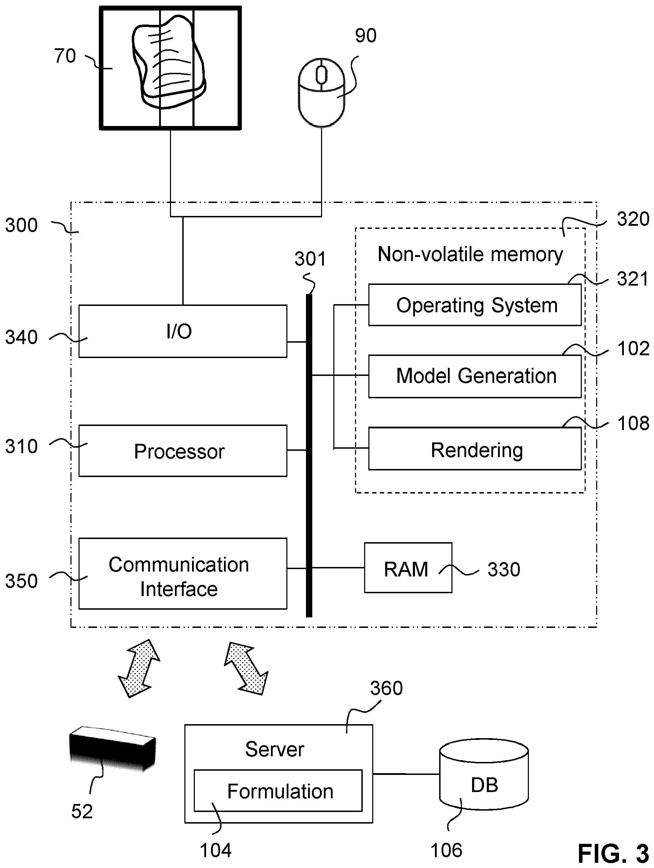

Figure 3 illustrates an exemplary hardware-oriented block diagram of a computer system that may be used in the method illustrated in Figures 1 and 2. In this example, the computer system comprises two main components: a local client computer (e.g., a laptop or tablet computer) 300, which may be located at the body shop, and a remote server computer 360, which may be located at the premises of the paint supplier.

The various components of the local client computer 300 communicate with each other via one or more buses 301, as it is well known in the art. The local client computer 300 comprises one or more processors 310. The processors 310 may comprise, for instance, a single- or multi-core CPU and a GPU, as it is well known in the art. The local client computer 300 further comprises one or more non-volatile memory devices 320, such as a flash memory device and/or a hard disk drive. The non-volatile memory 320 stores, inter alia, the operating system 321 of the local client computer 300 and several application programs, including the model generation software 102 and the rendering software 108. The non-volatile memory 320 further stores user data. The local client computer 300 further comprises random-access memory (RAM) 330, and input/output (I/O) interface 340, and a communication interface 350. Attached to the communication interface are the display device 70 and a pointing device 90. The communication interface 350 may include, e.g., one or more of an Ethernet interface, a WiFi interface, a Bluetooth™ interface etc. The communication interface may serve for communication with the remote server 360.

The remote server computer 360 may be set up similarly to the client computer 300. It stores for execution the formulation software 104. The client computer 360 may include or be connected to the database 106. Communication between the server computer 360 and the client computer 300 may take place via a wired or wireless network, e.g., via a LAN or a WAN, in particular, via the Internet.

The client computer further communicates, via the communication interface 350, with the first and/or second appearance capture devices 52, 82.

In other embodiments, certain functionality of the client computer 300 is instead transferred to the server computer 360. In particular, the server computer, rather than the client computer, may execute the model generation software 102 and/or the rendering software 108. This may be useful if the client computer is a "thin" client with limited computing power.

In yet other embodiments, the computer system consists of only a single computer, which executes all of the above-mentioned software components.

Exemplary appearance capture device

In the above example, the appearance capture devices 52 and 82 are preferably multi-angle spectrophotometers having imaging capabilities. Such devices are known per se. For instance, the MA-TX series available from X-Rite may be used. Suitable appearance capture devices are described in greater detail in document US20140152990A1, the contents of which are incorporated herein in their entirety by reference for teaching a handheld appearance capture device with imaging capabilities.

In brief, the appearance capture device may comprise a plurality of light sources to illuminate a measurement spot on the surface of a measurement object along different illumination directions. For instance, the optical axes of the light sources may be oriented at angles of -60°, -45°, -30°, -20°, 0°, +30° and +65° relative to the device normal. The appearance capture device may further comprise at least one spectral measurement channel in the form of a spectrometer and at least one spatially resolved color measurement channel in the form of a color RGB camera. Each measurement channel receives the measurement light reflected in the region of the illuminated measurement spot of the measurement object at a predefined viewing angle, e.g., +15° or +45°.

The spectrometer spectrally resolves the measurement light fed to it at the viewing angle and produces a set of spectral measurement values per measurement, each measurement value corresponding to intensity in a different wavelength range.

The RGB camera resolves the measurement light fed to it at the viewing angle both spatially and spectrally. Spectral resolution is limited to three channels according to the three colors RGB. The RGB camera correspondingly produces a raw dataset of 3*n measurement values per measurement, wherein n is the number of resolved pixels.

The output of the measurement device comprises a set of appearance attributes. Some of these appearance attributes are color attributes, e.g., in the form of the spectral measurement values determined by the spectrometers or in the form of color values derived therefrom, e.g., RGB, CIELAB or CIEXYZ values. Other appearance attributes are texture attributes, e.g., in the form of the raw image data obtained by the RGB camera or in the form of image data derived therefrom, e.g., in the form of monochromatic greyscale image data. The set of appearance attributes that is obtained from the measurement device is generally sparse compared to the appearance attributes required to generate an instance of an appearance model, as will be discussed in more detail in the next section.

Example of appearance model

Many different appearance models have been proposed in the art. In the following, an example will be described, which is particularly useful for describing the appearance of modern vehicle coatings. This exemplary appearance model is a refinement of the model proposed in [RMS+08]. The contents of [RMS+08] are incorporated herein by reference in their entirety for teaching an exemplary appearance model. The presently discussed appearance model is also called the "CPA2 model".

The appearance model assumes that the coating comprises two outermost layers: An opaque or translucent color layer, covered by a smooth transparent clear coat layer. The color layer may contain highly reflective effect particles (so-called "flakes"). Incoming light with direction $i$ is refracted into the clear coat layer before it hits the color layer along a "refracted" incoming direction $\bar{i}$. Reflected light propagates through the clear coat layer along an outgoing direction $\bar{o}$ before being refracted into the surrounding air in a direction $o$. Refraction is modeled by standard geometrical optics, assuming a typical index of refraction for the clear coat layer.

The appearance model of the color layer is separated into three parts:

(a) A monochromatic brightness BRDF part, which models the spatially and wavelength-averaged overall reflection behavior (brightness variation) of the material. The brightness BRFD part may show high frequencies in the angular domain.

(b) A spectral part in the form of a discrete color table, which describes low-frequency angular variations of color (color shifts).

(c) A BTF part in the form of a texture table, which captures the effect of reflecting flakes in the color layer. The BTF part is represented by a plurality of fixed-size images, each image being representative of texture at a particular combination of illumination and viewing angles.

The three parts are combined into one spatially-varying BRDF function representing the appearance of the paint surface, as follows:

$$f_{total}(i, o, x) = \big(1 - F(n, i, \eta)\big)\big(1 - F(n, o, \eta)\big)\big(f_{mono}(\bar{i}, \bar{o})C(\bar{i}, \bar{o}) + B(\bar{i}, \bar{o}, x)\big)$$

$$+ F(n, i, \eta)\delta\big(i, r(n, o)\big) \qquad (Eq.1)$$

Here,

| | |
|---|---|
| $i$ | designates the direction of incident light in air, |
| $o$ | the direction of reflected light in air, |
| $x$ | the location on the object surface (in two dimensions), |
| $n$ | the surface normal at location $x$, |
| $\bar{i}$ | the (refracted) direction of incident light in the clear coat layer, |

$\bar{o}$      the (refracted) direction of reflected light in the clear coat layer,

$F(n, d, \eta)$      a function to approximate the Fresnel reflection at medium boundaries of relative refractive index $\eta$ (or the Fresnel formulas themselves),

$f_{mono}(\bar{l}, \bar{o})$      the monochromatic BRDF model, see subsequent section (a),

$C(\bar{l}, \bar{o})$      the interpolated color table, see subsequent section (b),

$B(\bar{l}, \bar{o}, x)$      the interpolated texture table, see subsequent section (c),

$\delta(d_1, d_2)$      the Dirac delta function on $O(3)$, being nonzero only if $d_1 = d_2$, and

$r(n, d)$      the direction $d$ reflected at a surface of normal $n$.

## (a) Example of brightness BRDF part

The monochromatic brightness BRDF part is modeled using a multi-lobe microfacet-based BRDF model:

$$f_{mono}(\bar{l}, \bar{o}) = \frac{a}{\pi} + \sum_{k=1}^{K} \frac{s_k}{\pi} \frac{D_{\alpha_k}(\bar{h}) F(\bar{h}, \bar{l}, F_{0,k}) G(\bar{h}, \bar{l}, \bar{o})}{\bar{l}_z \bar{o}_z} \qquad (Eq.\,2)$$

Here ,

$\bar{h}$      designates the direction halfway between $\bar{l}$ and $\bar{o}$ (also referred to as the "halfway vector"),

$a$      designates the diffuse albedo,

$K$      designates the number of BRDF lobes,

$s_k$      designates the multiplier for the $k$-th lobe,

$D$      designates a microfacet normal distribution function according to the chosen model,

$\alpha_k$      designates the coarseness parameter for the $k$-th lobe,

$F_{0,k}$      designates the parameter for the Fresnel function for the $k$-th lobe, which might be an index of refraction ratio or the reflection at normal incidence, and

$G$      designates a so-called geometry term according to the chosen model.

In some embodiments, the Cook-Torrance BRDF model with the Schlick-Fresnel approximation is used. Here, $D$, $F$, and $G$ are defined as follows:

$$D_{\alpha_k}(\bar{h}) = \frac{exp\left(-\frac{tan^2\theta_h}{\alpha_k^2}\right)}{\pi \alpha_k^2 \cos^4\theta_h}$$

$$F(n, d, F_{0,k}) = F_{0,k} + (1 - F_{0,k})(1 - \langle n, d \rangle)^5$$

$$G(\bar{h}, \bar{l}, \bar{o}) = min\left(1, 2\frac{\bar{h}_z \bar{o}_z}{\langle \bar{o}, \bar{h} \rangle}, 2\frac{\bar{h}_z \bar{l}_z}{\langle \bar{o}, \bar{h} \rangle}\right)$$

Here,

$\theta_h$      designates the polar angle of the halfway vector $\bar{h}$ in an object-fixed reference frame in which the surface normal $n$ defines the $z$ axis ("north pole"),

$\bar{h}_z, \bar{o}_z$      and $\bar{l}_z$ designate the $z$ components of the vectors $\bar{h}$, $\bar{o}$ and $\bar{l}$, respectively, in said reference frame.

The free parameters of the model are $a$, $s_k$, $\alpha_k$, and $F_{0,k}$ for $k = [1..K]$. Typically, $K$ is chosen to be between 1 and 3.

## (b) Example of spectral part

The spectral part is modelled by a discrete color table that comprises values of one or more color attributes (e.g., hue and saturation) for a plurality of combinations of directions. The values of the color attributes will in the following be called "color values" for short. Advantageously, the Rusinkiewicz parameterization [Rus98] is employed for indicating directions. In simple embodiments, the color table is bivariate, i.e., the value of the color attribute depends only on the polar angles in the Rusinkiewicz parameterization, as will be explained in the following. These polar angles will in the following also be called the "coordinates" of the color table.

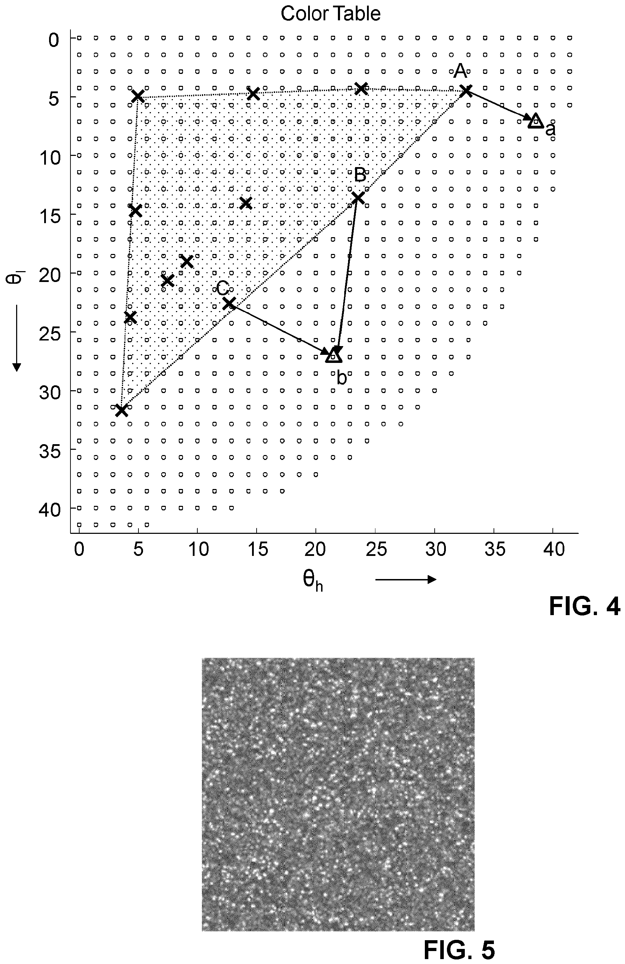

An exemplary representation of a bivariate discrete color table is shown in Fig. 4. On the horizontal axis, the polar angle $\theta_h$ of the halfway vector $\bar{h}$ is used as a first coordinate. This polar angle is also called the "flake angle" because it defines the angle between the surface normal $n$ of the paint layer and the normal of a flake in the paint layer that would cause a reflection of the incoming light from the incoming direction $\bar{l}$ into the outgoing direction $\bar{o}$. On the vertical axis, the polar difference angle $\theta_l$ between the halfway vector $\bar{h}$ and the incoming direction $\bar{l}$ is used as a second coordinate. The polar difference angle $\theta_l$ corresponds to the polar angle of the incoming direction $\bar{l}$ in a transformed reference frame in which the halfway vector $\bar{h}$ defines the $z$ axis. It may be interpreted as indicating the incoming direction relative to the flake normal. The color table contains one or more color values for each pair of coordinates (i.e., each combination of polar angles $\theta_h$ and $\theta_l$). Each pair of coordinates for which the color table contains one or more color values is represented by a circle in Fig. 4. Such a pair of coordinates (combination of polar angles $\theta_h$ and $\theta_l$) will in the following be called a "position" in the color table. The positions in the color table are regularly spaced. The color table is thus represented by a regular rectangular lattice of positions with their associated color values. The positions of two exemplary entries in the color table are marked as "a" and "b".

The appearance model assumes that the paint material has isotropic reflectance. For isotropic materials, color does not depend on the azimuthal angle $\phi_h$ of the halfway vector $\bar{h}$ in the object-fixed reference frame. Therefore, the color table does not consider the azimuthal angle $\phi_h$.

Furthermore, the model assumes that the effect particles ("flakes") themselves also have isotropic reflectance, and that color shifts are dominated by the specular component of the reflected light. Therefore, color only weakly depends on the azimuthal angle $\phi_l$ of the incoming direction $\bar{l}$ in the transformed reference frame. For this reason, the color table does not consider the azimuthal angle $\phi_l$ either.

The empty area at large values of $\theta_h$ and $\theta_l$ in the color table of Fig. 4 indicates combinations of "forbidden" angles, which are physically impossible due to refraction and total reflection at the interface of the clear coat layer with the surrounding air. The color table does not contain any color values for these combinations of angles.

### (c) Example of BTF part

The appearance model includes a bidirectional texture function (BTF) model. Generally speaking, a BTF model is a multi-dimensional function depending on planar texture coordinates $x$ as well as on view and illumination spherical angles. The BTF part is modelled by a discrete texture table. Each entry in the texture table is a texture slice, i.e., a texture image that is representative of the effect of flakes for a particular combination of illumination and viewing directions. In simple embodiments, the Rusinkiewicz parameterization is also used for the texture table, and the texture table is again bivariate, being again parameterized by the angles $\theta_h$ and $\theta_l$.

A simplified example of a texture slice is shown in Fig. 5. Bright spots in this Figure indicate reflections by flakes whose flake normal is oriented at the associated flake angle $\theta_h$ and which are visible at the associated difference angle $\theta_l$.

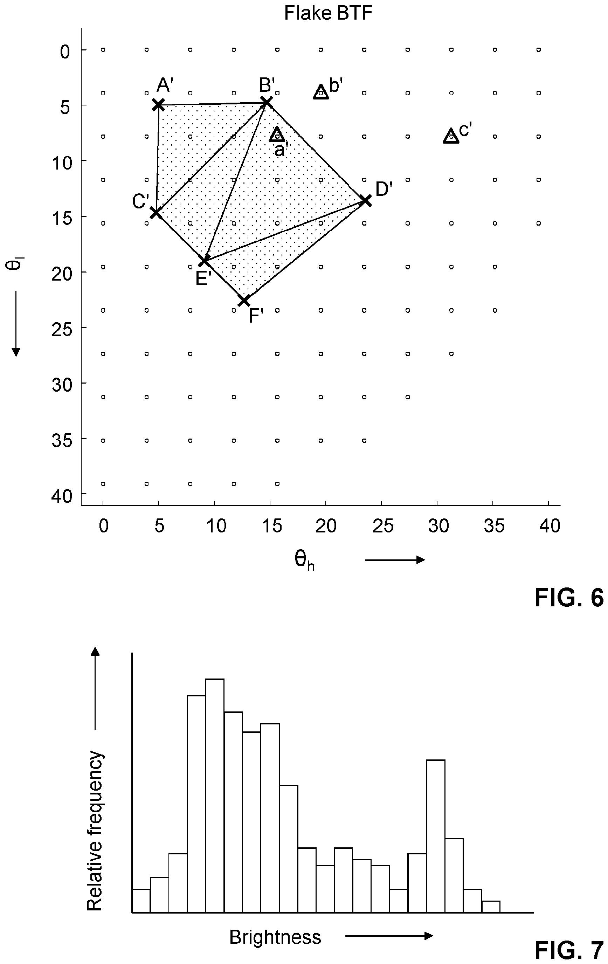

Figure 6 illustrates the discrete nature of the bivariate texture table. In the appearance model, texture slices are provided for the discrete positions (defined by their coordinates $\theta_h$, $\theta_l$) marked by circles. The spacing between the discrete values of $\theta_h$ and $\theta_l$, respectively, may be larger in the texture table than in the color table on account of the higher storage space requirements for each texture slice as compared to the color values in the color table. As in the color table, for the texture table does not have any entries for the "forbidden" angles. The positions of three exemplary texture slices are marked as a', b', and c'.

### Generating an instance of the appearance model

In the presently proposed method, only a limited set of appearance attributes for a limited number of combinations of directions $\bar{l}$, $\bar{o}$ is available from measurements using a handheld appearance capture device or from formulation software. These appearance attributes are generally not available for the same combinations of directions of incoming and outgoing light as those required by the discrete color and texture tables in the appearance model. Furthermore, the available appearance attributes are not necessarily of the same type as those required by the appearance model. For instance, the available appearance attributes usually do not include the parameters of a monochromatic brightness BRDF model as described above.

For generating an instance of the appearance model, it is therefore necessary to determine the appearance attributes of the appearance model from the limited set of available appearance attributes. It should be noted that the set of appearance attributes of the appearance model may have much larger cardinality than the limited set of available appearance attributes. Therefore, generating an instance of the appearance model may involve inter- and extrapolation.

As already discussed above, the free parameters of the brightness BRDF part are $a$, $s_k$, $\alpha_k$, and $F_{0,k}$ for $k = [1..K]$. These parameters can be determined using non-linear optimization as known in the art [RMS+08].

Next, the bivariate color table needs to be filled. Color attributes may be available only for a few pairs of angles $\theta_h$ and $\theta_l$, marked by crosses in the diagram of Fig. 6. Each pair of angles $(\theta_h, \theta_l)$ for which color attributes are available will in the following be called a "sample point". The sample points define a convex hull, shown in Fig. 6 as a dotted area. Each position $(\theta_h, \theta_l)$ for which color values are required in the bivariate color table will be called a "destination position" having "destination coordinates". In the present example, the destination positions are distributed on a regular grid, and accordingly these positions might also be called "grid points". The color values at the destination positions will be called the "destination color values". They may be in the same format as the available color attributes, or they may be in a different format. For instance, the available color attributes may comprise spectral data, while the color table may comprise reduced values (e.g., trichromatic values like RGB or CIEXYZ, or values in another color space like CIELAB). For the following discussion, it is assumed that a transformation between the format of the available color attributes at the sample points and the format of the color values in the color table is known.

The color values at the destination positions can readily be inter- and extrapolated from the available color attributes at the sample points by standard inter- and extrapolation procedures. If the format of the color values in the color table is different from the format of the available color attributes at the sample points, the necessary transformation can be applied before or after inter-/extrapolation as long as both the available color attributes at the sample points and the color values in the color table are expressed in a linear color space. If the color values in the color table are not expressed in a linear color space (e.g., as CIELAB values), inter-/extrapolation is first carried out in a linear color space, and only then the transformation is applied.

For instance, for interpolation within the convex hull, nearest-neighbor interpolation, inverse distance weighting [Sh68], or Gaussian process regression [W98] between the color attributes at the available sample points or between color values obtained from these color attributes by said transformation can be used, as it is well known in the art.

In preferred embodiments, for extrapolation at destination positions outside the convex hull having lower $\theta_h$ than the smallest $\theta_h$ of the convex hull or higher $\theta_h$ than the largest $\theta_h$ of the convex hull, the color attributes (or derived color values) at the nearest-neighbor sample point can be used. The nearest-neighbor sample point is to be understood to be that sample point that has the smallest Euclidean distance $\sqrt{\Delta\theta_h^2 - \Delta\theta_l^2}$ from the destination position. In Fig. 4, this is illustrated for destination position "a". The color value at destination position "a" is derived from the available color attributes at sample point A, which is the nearest-neighbor sample point from destination position "a".

For extrapolation at all other destination positions outside the convex hull, in particular, those having low or high $\theta_l$, a preferred embodiment would not only use the nearest-neighbor sample point, but would rather interpolate between the color attributes (or derived color values) of those two sample points that are closest to the destination position. In Fig. 4, this is illustrated by the entry at destination position "b". The two closest sample points are points B and C. The color value at destination position "b" would therefore be determined by interpolation between the color attributes (or derived color values) at sample points B and C.

Of course, other "well-behaved" interpolation and extrapolation methods, as they are known in the art, can be used as well.

Finally, the bivariate texture table needs to be filled. Texture samples in the form of images may be available only for a few pairs of angles $\theta_h$ and $\theta_l$, in the following again referred to as " sample points". For instance, as mentioned above, the appearance capture device 52 may have one or multiple cameras. The available texture samples may be image data for multiple illumination angles and a single viewing angle (e.g., in the case of a single RGB camera) or sets of image data for multiple illumination angles and multiple viewing angles (e.g., in the case of multiple RGB cameras).

In the example of Fig. 6, only six texture samples are available. The corresponding sample points are marked by crosses in Fig. 6 and labelled as A', B', C', D', E' and F'. The convex hull of these sample points is again shown as a dotted area. The texture samples at the sample points are called the "source textures". The pairs of angles $\theta_h$, $\theta_l$ for which texture slices need to be determined to fill the bivariate texture table are again called "destination positions" having "destination coordinates". As in the case of the color table, in the present example these points are arranged on a regular grid, and may therefore as well be called "grid points". The texture slices at the destination positions are accordingly called "destination textures". They can be determined from the available source textures as follows:

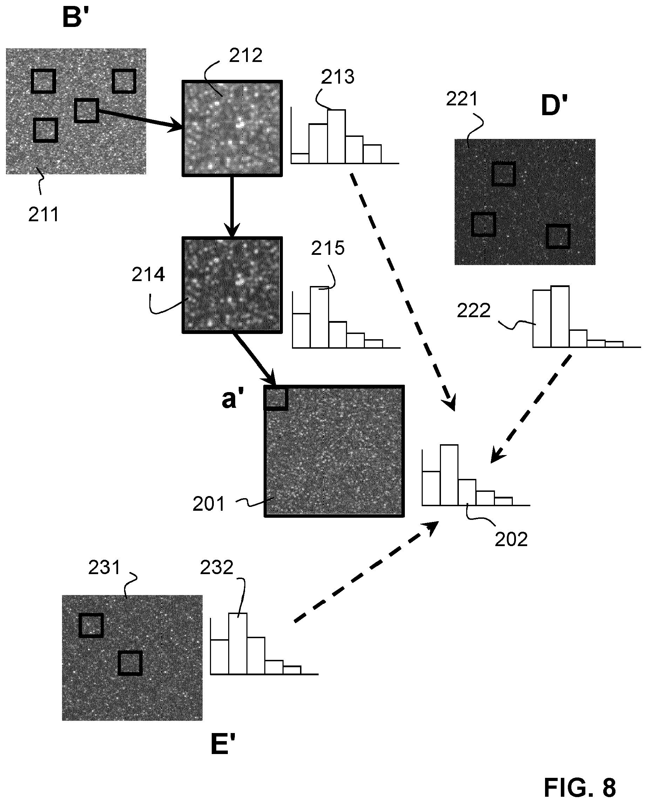

- For each destination position $(\theta_h, \theta_l)$ in the texture table, it is determined whether this destination position is inside the convex hull.
- If the destination position is inside the convex hull, the destination texture at this destination position is interpolated from the surrounding source textures using "statistical texture synthesis", as explained in more detail below. For instance, for position a' in Fig. 8, statistical texture synthesis would be used.

- If the destination position is not inside the convex hull, either the source texture of the nearest-neighbor sample point is used for defining the destination texture ("first strategy"), or a constant texture without any spatial variations is used, i.e., an "empty" texture that does not contain any reflections from flakes ("second strategy"). In one possible implementation, the first strategy may be employed for values $\theta_h$ that are smaller than the largest $\theta_h$ of the available sample points, and the second strategy for $\theta_h$ that are larger than the largest $\theta_h$ of the available sample points. For instance, for position b' in Fig. 8, the first strategy would be appropriate, while for position c', the second strategy may be used. It is also possible to use statistical texture synthesis for destination positions that are outside the convex hull as long as at least two sample points are sufficiently close to the destination position. For instance, it may be appropriate to use statistical texture synthesis for destination position b', using the source textures at sample points B' and D'.

Statistical texture synthesis

An exemplary embodiment of statistical texture synthesis for destination position a' in Fig. 6 will now be explained with reference to Figures 7 to 11.

Initially, three source textures at different sample points are selected for destination position a'. To this end, a Delaunay triangulation is created for all sample points A' to F'. In two dimensions, as in the present example, the result of the Delaunay triangulation is a set of triangles. The edges of the resulting triangles are illustrated by straight lines between the various sample points A' to F' in Fig. 6. Now, the triangle that contains the destination position a' is selected, and the sample points at the corners of this triangle are determined. In the present example, these are the sample points B', D', and E'. For the subsequent procedure, the source textures at these three sample points are used.

Next, interpolation weights for these three source textures are determined. To this end, the absolute barycentric coordinates of the destination position a' with respect to the selected triangle are determined, i.e., non-negative barycentric coordinates $\lambda_1$, $\lambda_2$, $\lambda_3$ fulfilling the condition $\lambda_1 + \lambda_2 + \lambda_3 = 1$. These barycentric coordinates are then used as the interpolation weights for the source textures at the corners of the selected triangle. In the example of Fig. 6, the absolute barycentric coordinate with respect to sample point B' is rather large, while the absolute barycentric coordinates with respect to sample points D' and E' are much smaller. Accordingly, the source texture at sample point B' will receive a comparatively large interpolation weight, while the interpolation weights for sample points D' and E' will be much smaller. For all other source textures, the interpolation weight is set to zero.

Now a destination texture is synthesized for the destination position a' from the three source textures at sample points B', D', and E'. This will be explained with reference to Fig. 8.

To this end, one of the three source textures is randomly chosen with a probability that is proportional to its interpolation weight. In the example of Fig. 8, the source texture 211 at sample point B' has been randomly chosen.

From this source texture 211, a texture patch, i.e., a small portion of the source texture, is now extracted at a random position within the source texture, indicated by a small rectangle in the source texture. In the example of Fig. 8, texture patch 212 is extracted. The extracted texture patch 212 is now modified so that one of its statistical properties at least approximately matches a corresponding averaged statistical property. In the present example, the extracted texture patch 212 is modified such that its pixel value histogram approximately matches an averaged pixel value histogram 202. This will now be explained in more detail.

An exemplary pixel value histogram is illustrated in Fig. 7. The pixel value histogram contains a plurality of relative frequency values, one such value for each discrete pixel value in an image. For instance, if the pixel values range from 0 to 255, the pixel value histogram will comprise, for each pixel value between 0 and 255, the relative frequency of that pixel value in the image. In some embodiments, the pixel values may be binned, each bin corresponding to a range of pixel values, and the pixel value histogram may accordingly comprise a reduced number of relative frequency values, each value representing the relative frequency of pixel values in one of the bins. The pixel value histogram can be used for assessing the distribution of brightness in an image, including overall brightness and contrast. For instance, the pixel value diagram of Fig. 7 would indicate that the image contains some bright spots or areas before a relative dark background.

In Fig. 8, all pixel value histograms are shown in a much-simplified manner as having only five bins each. The pixel value histogram of source texture 211, from which texture patch 212 was extracted, is shown as histogram 213. The averaged pixel value histogram is shown as histogram 202. This averaged histogram has been obtained as a weighted average of the pixel histograms 213, 222, and 232 of the three source textures 211, 221 and 231 at sample points B', D', and E', respectively, the weights being the interpolation weights as determined above. The pixel values of texture patch 212 are now modified so as to obtain a pixel value histogram that more closely matches the average pixel value histogram 202. Modification is carried out by applying a monotonically non-decreasing point-wise transformation to each pixel value in texture patch 212. Histogram-matching algorithms for finding a suitable transformation are well known in the art of digital image processing in connection with brightness and contrast modification. The modified texture patch is illustrated as texture patch 214, and the resulting pixel value histogram is illustrated as histogram 215. The resulting pixel value histogram 215 now closely matches the averaged pixel value histogram 202.

The modified texture patch 214 is now inserted into the destination texture 201 so that it seamlessly fits to the texture content already in the destination texture 201. To this end, the first modified texture patch 214 may simply be placed in a corner of the destination texture 201. Each subsequent texture patch is inserted onto the destination texture by a technique called "MinCut" or "Graphcut". Reference is made to document [Kw03]. Very briefly stated, a seam that enforces visual smoothness between the existing pixels and the newly placed patch is computed. The texture patch and the already existing content are stitched together along this seam.

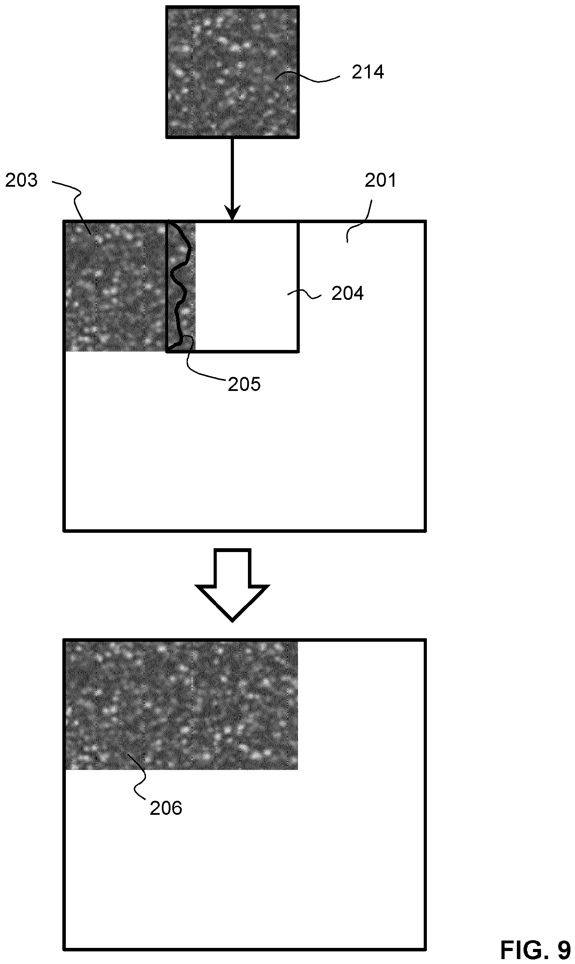

One such insertion step is illustrated in Figure 9. In this example, a modified texture patch 214 is to be inserted into a destination texture 201 that already comprises a texture patch 203. The position 204 of the newly inserted patch 214 is chosen such that the newly inserted patch 214 overlaps with the existing patch 203. A seam 205 is computed in the region of overlap such that the existing pixels along the seam and the newly inserted pixels appear to be visually smooth, i.e, that no visible boundary is created along the seam, as explained in detail in [Kw03]. The existing patch 203 and the newly inserted patch 214 are stitched together along this seam, the remainder of each patch being discarded. This results in a larger patch 206.

This procedure is now repeated as often as necessary to completely fill the destination texture 201.

Flow diagram for filling a discrete texture table

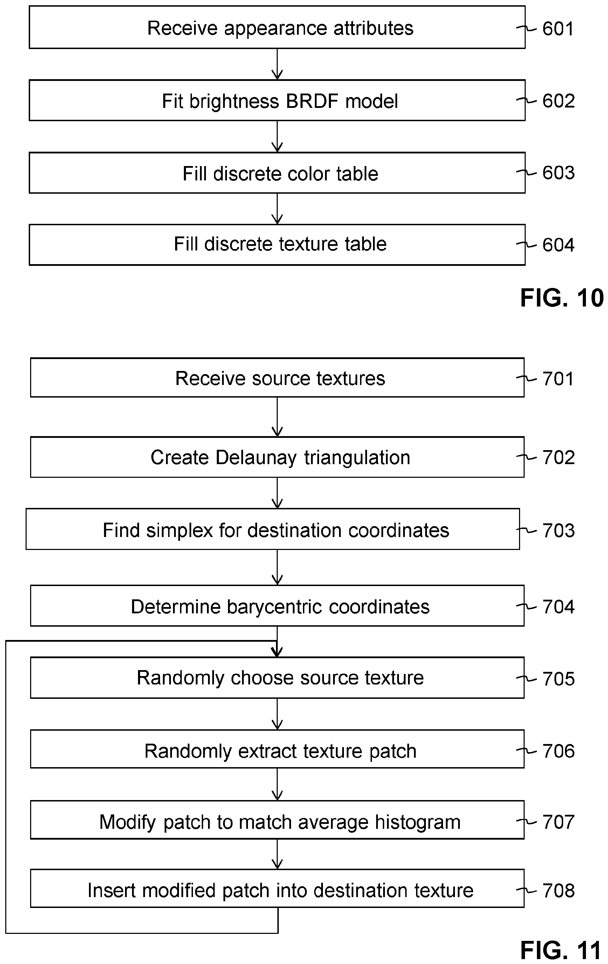

Figure 10 shows a flow diagram that illustrates an exemplary procedure of generating an instance of the appearance model. In step 601, the model generation software receives the set of available appearance attributes, which may have been determined by an appearance capture device measuring a target object 50 or by formulation software determining constituents of a candidate formula 60, including the constituents' proportional amounts in the candidate formula 60. In step 602, the software carries out a fit of the brightness BRDF model to the available appearance attributes. In step 603, the software fills the discrete color table, based on the available appearance attributes. In step 604, the software fills the discrete texture table, based on the available appearance attributes. To this end, it determines the destination textures that form the entries of the discrete texture table.

Flow diagram for statistical texture synthesis

Figure 11 shows a flow diagram that illustrates an exemplary procedure of determining a destination texture associated with a set of destination coordinates. In step 701, the model generation software receives a plurality of source textures and their associated coordinates. In step 702, the software creates a Delaunay triangulation. In step 703, the software identifies that simplex of the Delaunay triangulation that contains the destination coordinates. In step 704, the software determines the barycentric coordinates of the destination coordinates with respect to the identified simplex and stores these as interpolation weights. In step 705, the software randomly chooses one of the source textures at the corners of the selected simplex with a probability according to its interpolation weight. In step 706, the software randomly extracts a texture patch from the chosen source texture. In step 707, the software modifies the patch to match its pixel value histogram to an average pixel value histogram. In step 708, the software inserts the modified patch into the destination texture such that it seamlessly fits the existing texture content in the destination texture. Steps 705 to 708 are repeated until the destination texture is completely filled. The completed destination texture may then be used as an entry in the discrete texture table.

Computing the texture table of a composite material

When computing the entries of a discrete texture table for a composite material that is a mixture of several constituents (e.g., of a candidate material that is a mixture of constituents according to a recipe determined by formulation software), statistical texture synthesis may be likewise employed. In this case, the source patches may be randomly sampled from source textures associated with the different constituents with probabilities according to their concentrations in the mixture.

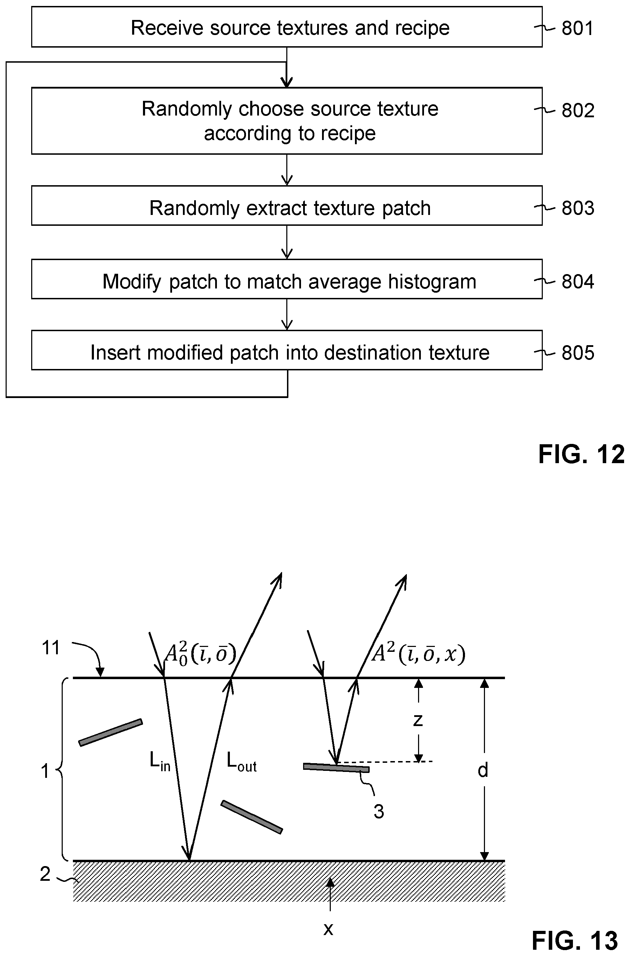

This is illustrated in Fig. 12. In step 801, the model generation software receives at least two source textures and a recipe. Each source texture is associated with one constituent of the composite material. In step 802, the software randomly chooses one of the source textures with a probability according an interpolation weight that reflects the concentration of that constituent in the composite material. In step 803, the software randomly extracts a texture patch from the chosen source texture. In step 804, the software modifies the patch to match its pixel value histogram to an average pixel value histogram. In step 805, the software inserts the modified patch into the destination texture such that it seamlessly fits the existing texture content in the destination texture. Steps 802 to 805 are repeated until the destination texture is completely filled. The completed destination texture may then be used as an entry in the discrete texture table.

Taking absorption and scattering into account

In some cases, when computing textures of a material that comprises effect pigments as well as non-effect pigments (toners), the statistical texture synthesis operation delivers a destination texture that does not match the texture that would be obtained if a measurement of the actual material was carried out. In particular, the predicted color at the positions where effect pigment particles are present might not correspond to the actual color.

This is at least partly due to the fact that, in practice, the source textures of the individual constituents are often based on measurements of samples that comprise an effect pigment in a clear base material, while the actual mixture may contain non-effect pigments (toners) as well. The statistical texture synthesis procedure described above does not take into account that the toners partly absorb and scatter light, preventing some of the incident the light from reaching the effect pigment and some of the reflected light from reaching the observer.

Therefore, a correction may be carried out. In this correction, pixel values in the destination texture are modified to correct for absorption and scattering in the coating.

Such a modification procedure is not only useful for destination textures obtained by statistical texture synthesis, as explained above, but there are many other situations where a texture image may not adequately reflect the effects of absorption and scattering by toners, and therefore a modification of the texture image may be necessary to take these effects into account. For instance, a texture image may have been generated by some simulation algorithm that is not based on measurements, or a texture image may have been directly obtained from a measurement of an effect pigment in a clear base material.

Example 1: Coating comprising an effect pigment

An exemplary procedure of modifying a texture image will be explained in more detail in the following, using the example of a coating that comprises an effect pigment in the form of metallic flakes as well as a non-effect pigment (toner).

Figure 13 illustrates a coating 1 with thickness d on a substrate 2. Effect pigment particles 3 in the form of metallic flakes and toners (not illustrated) are embedded in the coating 1 at different depths z. The coating defines a surface 11. Incident light $L_{in}$ impinges onto the surface 11 and is refracted into the coating along a direction $\bar{l}$. The incident light is transported through the coating until it hits either the substrate 2 or an effect pigment particle 3. From there, the light is reflected towards the surface 11 along a direction $\bar{o}$ and leaves the coating 1 at the surface 11 as reflected light $L_{out}$. On its way through the coating, each spectral component of the light is attenuated by absorption and scattering by the toner in the coating, the amount of attenuation depending on the wavelength of the spectral component. In a linear, multidimensional color space, the attenuation of the light along the light path in the coating can be described by an attenuation factor $A^2(\bar{l},\bar{o},x)$ for each color coordinate of the color space. For instance, in an RGB-based three-dimensional color space, an attenuation factor $A_R^2(\bar{l},\bar{o},x)$ for red light, an attenuation factor $A_G^2(\bar{l},\bar{o},x)$ for green light, and an attenuation factor $A_B^2(\bar{l},\bar{o},x)$ for blue light can be defined.

The attenuation factor $A^2(\bar{l},\bar{o},x)$ for each color coordinate depends on the depth z at which the light is reflected, which in turn depends on the surface position x, since the surface position determines at which depth z a reflecting object (effect pigment particle or substrate) is located below the surface 11. The attenuation factor $A^2$ further depends on the directions $\bar{l}$ and $\bar{o}$ of the incident and reflected light, since these directions influence the length of the light path of the light through the coating 1. In particular, the attenuation factor $A^2(\bar{l},\bar{o},x)$ depends on whether or not a reflecting effect pigment particle 3 is embedded in the coating below the surface position x. If an effect pigment particle is present at that position, the attenuation factor $A^2$ depends on the depth z at which the effect pigment particle is embedded in the coating. If no effect pigment particle is present at the position x, the light is reflected only at the substrate 2 at a depth z that corresponds to the thickness d of the coating. The corresponding attenuation factor will in the following be called the reference attenuation factor $A_0^2(\bar{l},\bar{o})$.

The attenuation factor $A^2$ may be computed by carrying out a simulation of light transport in the coating. A simulation of light transport has the following prerequisites:

- The concentration of non-effect pigments (toners) in the material whose texture is to be predicted should be known.
- Optical parameters that describe at least the absorption behavior of the toners should be known, e.g. the absorption coefficient $\sigma_a$ for a plurality of wavelengths. Preferably also optical parameters that describe the scattering behavior should be known, e.g., scattering coefficient $\sigma_s$ for a plurality of wavelengths. These parameters should preferably be provided with higher spectral resolution than just three color bands, i.e., for more than three wavelengths. The light transport calculations should then account for this higher accuracy information. Nonetheless, the final attenuation factor can be converted and then stored in three-dimensional color space, e.g., an RGB-based color space.

- If more than one toner is present, the computation engine should be able to determine a combined absorption coefficient $\sigma_a$ and preferably a combined scattering coefficient $\sigma_s$ based on the concentrations of toners and their individual scattering and absorption coefficients.

Light transport can be described as a set of connected differential equations, each describing light flux into a certain direction for a certain depth $z$ in the coating:

$$F_i(z)$$

Here $i$ is the index of one such direction (may be upward or downward). These differential equations are coupled through scattering effects within the coating or at the boundaries of the coating. The differential equations can be numerically solved for arbitrary depth $z$ to determine the light flux that is incident on the effect pigment particle 3 or substrate 2 before being reflected by the effect pigment particle 3 or substrate 2 towards the surface 11. The solution can be used to compute an attenuation $A_{in}(\bar{l},x)$ of the incident light on its way from the surface 11 to the effect pigment particle 3 or substrate 2 for each color coordinate in the color space. In the same spirit, an attenuation $A_{out}(\bar{o},x)$ of the reflected light on its way from the effect pigment particle 3 to the surface 11 can be computed for each color coordinate. Because the direction $\bar{o}$ of the reflected light may be different from the direction $\bar{l}$ of the incident light, the path length of the reflected light through the coating 1 may be different than the path length of the incident light, and accordingly the attenuation of the reflected light may be different from the attenuation of the incident light. The total attenuation factor can then be calculated as $A^2(\bar{l},\bar{o},x) = A_{in}(\bar{l},x) \cdot A_{out}(\bar{o},x)$.

Instead of calculating the attenuation factor $A^2(\bar{l},\bar{o},x)$ for each surface position $x$, it is also possible to calculate attenuation factors $\tilde{A}^2(\bar{l},\bar{o},z)$ for a plurality of depths $z$, to store these attenuation factors in a lookup table, and to determine the attenuation factor $A^2(\bar{l},\bar{o},x)$ for a surface position $x$ by first determining the depth $z(x)$ at which the reflective object (effect pigment particle or substrate) is located at that surface position and then retrieving the appropriate attenuation factor $\tilde{A}^2(\bar{l},\bar{o},z)$ from the lookup table.

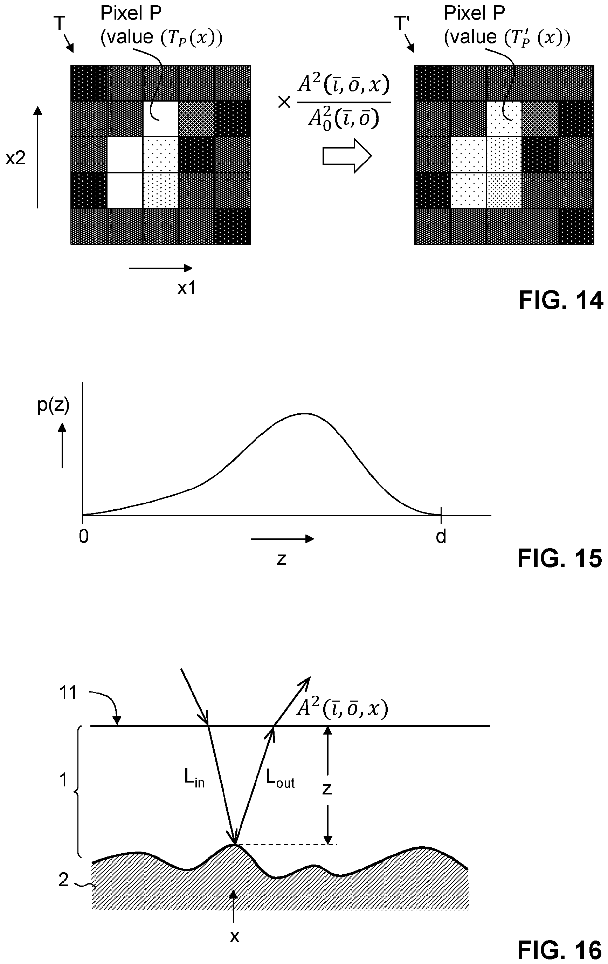

Figure 14 illustrates how attenuation factors $A^2(\bar{l},\bar{o},x)$ can be used to modify pixel values in a texture image. On the left side of Fig. 14, a small patch of an unmodified texture image $T$ is illustrated. The texture image $T$ represents the texture of a coating 1 for a particular combination of directions $\bar{l},\bar{o}$ of incident and reflected light, as obtained, e.g., by statistical texture synthesis from measured textures of reference panels on which coatings with the effect pigment in a clear base material were applied. In the terminology of Eq. (1), the texture image $T$ represents the BTF part $B(\bar{l},\bar{o},x)$ of the spatially varying BRDF function for the coating 1 for a particular combination of directions $\bar{l},o$. Bright pixels in the texture image $T$ indicate that an effect pigment particle is present at the associated position $x$, and that said effect pigment particle has an orientation that causes specular reflection from the incident direction $\bar{l}$ into the reflected direction $\bar{o}$ at the effect pigment particle.

The texture image $T$ comprises a plurality of pixels $P$, each pixel being associated with a surface position $x = (x1,x2)$ in two dimensions. Each pixel has a pixel value $T_P(x)$ in a linear color space. For instance, in an RGB-based color space, the pixel value $T_P(x)$ is a vector with three components $T_P^R(x)$, $T_P^G(x)$, $T_P^B(x)$, one each for R, G and B.

From the pixel value $T_P(x)$ of each pixel $P$, a brightness value may be calculated. The brightness value of the pixels $P$ in the texture image $T$ may be analyzed to determine bright pixels. For instance, a thresholding method may be used by which pixels above a threshold brightness are considered bright pixels. As another example, a contrast analysis may be carried out by which pixels that are brighter than surrounding pixels by at least a certain amount are considered bright pixels. In the example of Fig. 14, there are five bright pixels. For these bright pixels, it may be assumed that an effect pigment particle is present in the coating below the surface at the corresponding surface positions $x$.

Next, the depth $z$ of the effect pigment particle is estimated. In practice, the depth $z$ is not known a priori, and assumptions must be made. For instance, in simple embodiments, one may assume that the effect pigment particles are buried in the coating at an average depth $\langle z \rangle$. The average depth $\langle z \rangle$ may readily be estimated based on the thickness $d$ of the coating, e.g., as being a predefined fraction of the thickness $d$. In more complex embodiments, the depth may be randomly set according to a predefined depth distribution, assuming that the effect pigment particles are statistically distributed in the coating according to said depth distribution. The depth distribution may be known from measurements, or it may be based on assumptions. An example of a depth distribution $p(z)$ is illustrated in Fig. 15. In this figure, $p(z)$ indicates a probability density of finding an effect pigment particle at a certain depth $z$ between the surface ($z = 0$) and the substrate ($z = d$). The probability density may be non-uniform due to various reasons, e.g., surface tension effects and setting processes of the effect pigment particles after application of the paint coating. In yet other embodiments, the depth $z$ may be estimated according to the brightness of the bright pixels, higher brightness corresponding to less depth.

Next, an attenuation factor $A^2(\overline{l},\overline{o},x)$ may be determined for the bright pixels. Since $\overline{l},\overline{o}$ and $z(x)$ are now known, this may be done as described above.

Next, the pixel values $T_P(x)$ of the bright pixels may be modified for each coordinate of the color space, using the $A^2(\overline{l},\overline{o},x)$. This may be done by multiplying each component of the pixel value $T_P(x)$ by the corresponding attenuation factor $A^2(\overline{l},\overline{o},x)$ and normalizing the result by a normalization factor. The normalization factor may be based on the reference attenuation factor $A_0^2\,(\overline{l},\overline{o})$ or may be derived in any other suitable manner. Preferably normalization is carried out in such a manner that the overall brightness of the bright pixels remains unchanged by the modification of the pixel value. It is noted that only the pixel values of bright pixels need to be modified, as it is assumed that no effect pigment particles are present at surface positions corresponding to pixels that are not bright pixels. For these pixels, the attenuation factor would be the reference attenuation factor $A_0^2\,(\overline{l},\overline{o})$, and the normalization operation would preferably cause the corresponding pixel values to remain unmodified.

Example 2: Coating on substrate with non-uniform surface topography

In a similar spirit, a texture image of a coating on a substrate with non-uniform surface topography may be modified. This is illustrated in Figure 16. An attenuation factor $A^2(\overline{l},\overline{o},x)$ is calculated for each pixel with surface position $x$. This attenuation factor depends on the thickness $z$ of the coating at this surface position. The corresponding pixel value may then be modified using this attenuation factor. As a reference attenuation factor $A_0^2\,(\overline{l},\overline{o})$, an attenuation factor for a reference thickness, e.g., for an average thickness $\langle z \rangle$, may be calculated for each coordinate in the color space, and modification of the pixel value may be carried out by multiplying each component of the pixel value by the corresponding attenuation factor $A^2(\overline{l},\overline{o},x)$ and normalizing the result using the reference attenuation factor $A_0^2\,(\overline{l},\overline{o})$.

Flow diagram

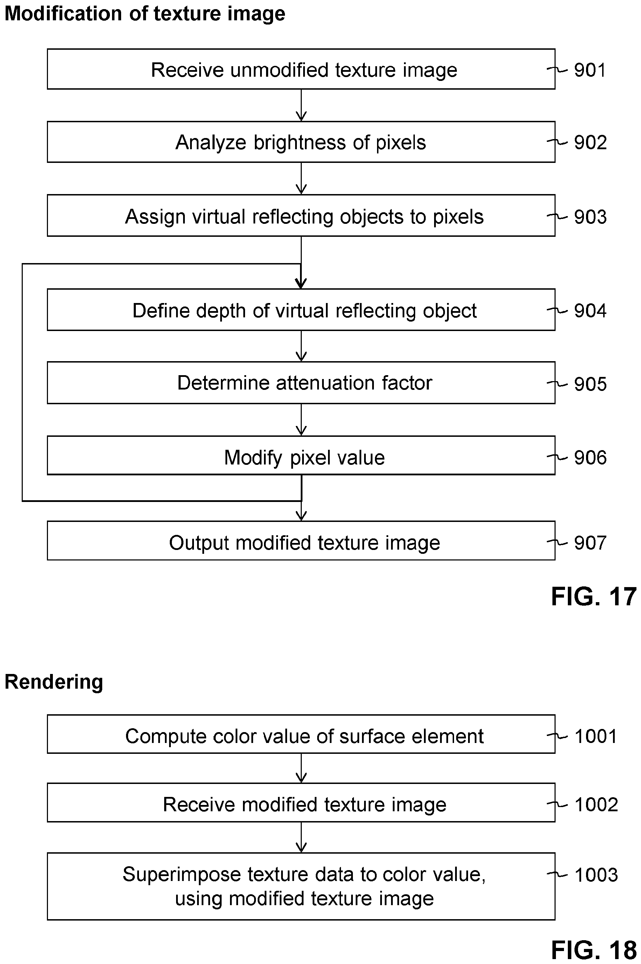

Fig. 17 shows a flow diagram that summarizes the above-described modification method. In step 901, an unmodified texture image is received. In step 902, the brightness of the pixels in the unmodified texture image is analyzed to find out at which positions and possibly what depths virtual reflecting objects (e.g., effect pigment particles or substrate portions) are expected to be located below the surface of the coating. In step 903, the virtual reflecting objects are assigned to pixels of the texture image. In step 904, the depth of a virtual reflecting object assigned to a selected pixel is defined by one of the methods described above. In step 905, the attenuation factor for that depth is determined. In step 906, the pixel value is modified accordingly, using the attenuation factor. Steps 904-906 are repeated for all pixels to which virtual reflecting objects have been assigned. In step 907, the resulting modified texture image is outputted.

Rendering a surface element using the modified texture image

For visualizing the coating, a planar surface element of the coating may now be rendered as follows. First, the color value of the surface element is determined, considering the directions under which the surface element is illuminated and under which it is observed, but neglecting texture. This may be done by multiplying a value of a monochromatic brightness BRDF for this combination of directions with a corresponding entry of a discrete color table, as described in conjunction with Eq. (1) above. Next, the color value is superimposed with texture data to cause the appearance of the surface element to vary spatially across the surface element. This may be done by simply adding pixel values of the modified texture image to the color value at different locations of the surface element. This corresponds to the addition of the BTF term $B(\overline{l},\overline{o},x)$ in Eq. (1).

This procedure is illustrated in Fig. 18. In step 1001, a color value for the surface element is computed, considering the directions under which the surface element is illuminated and under which it is observed. In step 1002, a modified texture image for this combination of directions is received. In step 1003, texture data derived from the modified texture image are superimposed onto the color value.

This procedure may be repeated for as many surface elements as needed for rendering the entire coating, taking into account that the directions of illumination and observation may be different between the surface elements due to a curved shape of the coating.

Modifications

From the above description it is apparent that the above-described method of taking absorption and scattering into account may be applied in any situation where a texture has been computed by some method that does not consider the effect of toners and needs to be corrected for the presence of the toners.

Some imaging spectrophotometers have a monochromatic image sensor and therefore provide texture images in the form of greyscale images only. Likewise, some appearance models might store texture data in the form of greyscale images only. In this case, it may be necessary to first transform the greyscale images into images in a multidimensional color space (e.g., into RGB images) to obtain unmodified texture images in said color space, which can then be modified by the above-described modification method.

References

[Ber19] Roy S. Berns, "Billmeyer and Saltzman's Principles of Color Technology", 4th edition, Wiley, 2019, p. 184

[Kw03] Kwatra, V., Schodl, A., Essa, I., Turk, G. and Bobick, A., "Graphcut textures: image and video synthesis using graph cuts", ACM Transactions on Graphics (ToG), 2003, 22(3), pp. 277-286.

[MTG+19] Gero Müller, Jochen Tautges, Alexander Gress, Martin Rump, Max Hermann, and Francis Lamy, "AxF - Appearance exchange Format", Version 1.7, April 11, 2019, available upon request from X-Rite, Inc.

[RMS+08] Martin Rump, Gero Müller, Ralf Sarlette, Dirk Koch and Richard Klein, "Photorealistic Rendering of Metallic Car Paint from Image-Based Measurements", In: R. Scopigno, E. Groller (eds.), Computer Graphics Forum, Eurographics, Apr. 2008, 27:2 (527-536)

[RSK09] Martin Rump, Ralf Sarlette and Richard Klein, "Efficient Resampling, Compression and Rendering of Metallic and Pearlescent Paint", In: M. Magnus, B. Rosenhahn, H. Theisel (ed.), Proceedings of Vision, Modeling, and Visualization, Nov. 2009, pp. 11-18

[Rus98] Szymon M. Rusinkiewicz, "A New Change of Variables for Efficient BRDF Representation", In: G. Drettakis G., N. Max (eds.), Rendering Techniques '98, Eurographics, Springer, Vienna, 1998, https://doi.org/10.1007/978-3-7091-6453-2_2

[Sh68] Shepard, D., "A two-dimensional interpolation function for irregularly-spaced data", In: Proceedings of the 1968 23rd ACM national conference, 1968, pp. 517-524

[W98] Williams, C.K., "Prediction with Gaussian processes: From linear regression to linear prediction and beyond". In: Learning in graphical model, Springer, Dordrecht, 1998, pp. 599-621.

**Claims**

1. A computer-implemented method of modifying a texture image ($T$), the texture image ($T$) representing a texture of a coating (1), the texture image ($T$) comprising a plurality of pixels ($P$), each pixel ($P$) having a pixel value ($T_P(x)$) in a color space, each pixel ($P$) being associated with a surface position ($x$) on a surface (11) of the coating (1), the method comprising, for at least one pixel ($P$) in the texture image ($T$), the steps of:

   a) defining a depth ($z$) at which a virtual reflecting object is located below the surface (11) of the coating (1) at the surface position ($x$) associated with the pixel ($P$);
   b) for at least one coordinate of the color space, determining an attenuation factor ($A^2(\overline{l},\overline{o},x)$) for light that has entered the coating (1) through the surface (11) as incident light ($L_{in}$) and has been reflected at the virtual reflecting object at said depth ($z$) to form reflected light ($L_{out}$), the attenuation factor ($A^2(\overline{l},\overline{o},x)$) being indicative of attenuation of said light along a light path from the surface (11) to the virtual reflecting object and, after reflection, from the virtual reflecting object to the surface (11), the attenuation factor ($A^2(\overline{l},\overline{o},x)$) being determined based on a simulation of light transport through the coating (1) along said light path; and
   c) modifying the pixel value ($T_P(x)$) of the pixel ($P$) to obtain a modified pixel value ($T_P'(x)$), using the attenuation factor ($A^2(\overline{l},\overline{o},x)$).

2. The computer-implemented method of claim 1,

   wherein the texture image ($T$) represents the texture of the coating (1) for a predetermined direction ($\overline{l}$) of incident light ($L_{in}$) and a predetermined direction ($\overline{o}$) of reflected light ($L_{out}$),
   wherein the attenuation factor ($A^2(\overline{l},\overline{o},x)$) is a product of a first attenuation factor ($A_{in}(\overline{l},x)$) and a second attenuation

factor ($A_{out}(\bar{o},x)$),

wherein the first attenuation factor ($A_{in}(\bar{l},x)$) is indicative of attenuation of the incident light ($L_{in}$) along a light path from the surface (11) to the virtual reflecting object (2, 3), the first attenuation factor ($A_{in}(\bar{l},x)$) depending on the direction ($\bar{l}$) of the incident light ($L_{in}$), and

wherein the second attenuation factor ($A_{out}(\bar{o},x)$) is indicative of attenuation of the reflected light ($L_{out}$) along a light path from the virtual reflecting object to the surface (11), the second attenuation factor ($A_{out}(\bar{o},x)$) depending on the direction ($\bar{o}$) of the reflected light ($L_{out}$).

3. The method of claim 1 or 2, wherein the modified pixel value ($T_P{'}(x)$) is obtained by multiplying the unmodified pixel value ($T_P(x)$) with the attenuation factor ($A^2(\bar{l},\bar{o},x)$), normalized by a normalization factor.

4. The method of claim 3, wherein the normalization factor is a reference attenuation factor $\left(A_0^2(\bar{l},\bar{o})\right)$ is indicative of attenuation of light along a light path from the surface (11) to a virtual reflective reference object at a reference depth and, after reflection, from the virtual reflective reference object to the surface (11).

5. The method of claim 4, wherein the virtual reflective reference object is a substrate (2) on which the coating (1) is disposed.

6. The computer-implemented method of any one of the preceding claims, comprising:

   analyzing brightness of the unmodified pixel values ($T_P(x)$) in the texture image ($T$);
   based on the analysis of brightness, defining a surface position ($x$) and/or depth ($z$) at which the virtual reflecting object is located below the surface (11) of the coating (1).

7. The computer-implemented method of any one of the preceding claims, wherein the depth ($z$) is defined by a random selection according to a predetermined depth distribution ($P(z)$).

8. The computer-implemented method of any one of the preceding claims,

   wherein the coating (1) comprises effect pigment particles (3), and
   wherein steps a) to c) are carried out for a plurality of pixels ($P$) associated with surface positions ($x$) at which effect pigment particles (3) are expected to be located below the surface (11) of the coating (1), each effect pigment particle (3) representing a virtual reflecting object.

9. The computer-implemented method of claim 1,

   wherein the coating (1) is present on a substrate (2) having a non-uniform surface topography, a thickness of the coating (1) varying with surface position ($x$), and
   wherein steps a) to c) are carried out for a plurality of pixels ($P$) associated with different surface positions ($x$), the substrate (2) representing the virtual reflecting object.

10. The computer-implemented method of any one of the preceding claims, wherein the coating (1) comprises at least one toner, and wherein the method comprises a step of determining the unmodified texture image ($T$) based on at least one measurement and/or based on a synthesis operation, wherein the measurement and/or synthesis operations do not take the presence of the at least one toner into account.

11. The computer-implemented method of claim 10, wherein the unmodified texture image ($T$) is determined based on at least one measurement of at least one reference coating, wherein the reference coating does not comprise the at least one toner.

12. The computer-implemented method of claim 11, wherein the reference coating comprises an effect pigment while not comprising the at least one toner.

13. A computer-implemented method of rendering a surface element of the coating (1), the method comprising:

   computing a color value for the surface element, neglecting texture; and

superimposing texture data onto the color value, the texture data being based on the modified texture image ($T'$).

14. A device for modifying a texture image ($T$), the device comprising a processor (310) and a memory (320) comprising program instructions (102, 104, 108) configured to cause the processor (310) to carry out the method of any one of the preceding claims.

15. A computer program product comprising program instructions (102, 104, 108) which, when executed by a processor, cause the processor to carry out a method according to any one of claims 1 to 13.

**FIG. 1**

| Determine appearance attributes of target sample | — 501 |

↓

| Transmit appearance attributes | — 502 |

↓

| Generate first instance of appearance model | — 503 |

↓

| Read database | — 504 |

↓

| Determine recipe | — 505 |

↓

| Determine expected appearance attributes | — 506 |

↓

| Generate second instance of appearance model | — 507 |

↓

| Obtain geometric model | — 508 |

↓

| Visualize virtual object | — 509 |

↓

| Compare virtual object portions | — 509 |

↓

| Amend recipe or select new recipe | — 510 |

↓

| Prepare trial sample | — 511 |

↓

| Determine appearance attributes of trial sample | — 512 |

↓

| Determine amended recipe | — 513 |

**FIG. 2**

**FIG. 3**

FIG. 4

FIG. 5

Flake BTF

FIG. 6

Brightness ⟶

FIG. 7

FIG. 8

FIG. 9

| Receive appearance attributes | 601 |

| Fit brightness BRDF model | 602 |

| Fill discrete color table | 603 |

| Fill discrete texture table | 604 |

**FIG. 10**

| Receive source textures | 701 |

| Create Delaunay triangulation | 702 |

| Find simplex for destination coordinates | 703 |

| Determine barycentric coordinates | 704 |

| Randomly choose source texture | 705 |

| Randomly extract texture patch | 706 |

| Modify patch to match average histogram | 707 |

| Insert modified patch into destination texture | 708 |

**FIG. 11**

Receive source textures and recipe — 801

Randomly choose source texture according to recipe — 802

Randomly extract texture patch — 803

Modify patch to match average histogram — 804

Insert modified patch into destination texture — 805

## FIG. 12

11

$A_0^2(\bar{\imath},\bar{o})$     $A^2(\bar{\imath},\bar{o},x)$

$L_{in}$   $L_{out}$

z

d

1

3

2

x

## FIG. 13

Pixel P
(value ($T_P(x)$))

$$\times \frac{A^2(\bar{\iota},\bar{o},x)}{A_0^2(\bar{\iota},\bar{o})}$$

T

x2

x1

Pixel P
(value ($T_P'(x)$))

T'

**FIG. 14**

p(z)

0

z

d

**FIG. 15**

11

1

2

$$A^2(\bar{\iota},\bar{o},x)$$

$L_{in}$   $L_{out}$   z

x

**FIG. 16**

## Modification of texture image

| Receive unmodified texture image | 901 |
| --- | --- |

↓

| Analyze brightness of pixels | 902 |
| --- | --- |

↓

| Assign virtual reflecting objects to pixels | 903 |
| --- | --- |

↓

| Define depth of virtual reflecting object | 904 |
| --- | --- |

↓

| Determine attenuation factor | 905 |
| --- | --- |

↓

| Modify pixel value | 906 |
| --- | --- |

↓

| Output modified texture image | 907 |
| --- | --- |

**FIG. 17**

## Rendering

| Compute color value of surface element | 1001 |
| --- | --- |

↓

| Receive modified texture image | 1002 |
| --- | --- |

↓

| Superimpose texture data to color value, using modified texture image | 1003 |
| --- | --- |

**FIG. 18**

Europäisches
Patentamt

European
Patent Office

Office européen
des brevets

**EUROPEAN SEARCH REPORT**

Application Number

EP 22 15 0557

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SERGEY ERSHOV ET AL: "Rendering Pearlescent Appearance Based On Paint-Composition Modelling", COMPUTER GRAPHICS FORUM : JOURNAL OF THE EUROPEAN ASSOCIATION FOR COMPUTER GRAPHICS, WILEY-BLACKWELL, OXFORD, vol. 20, no. 3, 25 July 2002 (2002-07-25), pages 227-238, XP071486188, ISSN: 0167-7055, DOI: 10.1111/1467-8659.00515 * abstract * * sections 1, 3, 4, 5.1-5.3, 6-8 * * figures 1, 5 * | 1-15 | INV. G06T15/50 G06T11/00 |
| A,D | MARTIN RUMP ET AL: "Photo-realistic Rendering of Metallic Car Paint from Image-Based Measurements", COMPUTER GRAPHICS FORUM : JOURNAL OF THE EUROPEAN ASSOCIATION FOR COMPUTER GRAPHICS, WILEY-BLACKWELL, OXFORD, vol. 27, no. 2, 24 April 2008 (2008-04-24), pages 527-536, XP071487252, ISSN: 0167-7055, DOI: 10.1111/J.1467-8659.2008.01150.X * abstract * * sections 1, 3, 5.1, 5.1.1 * * figures 1, 2 * | 1-15 | |
| | -/-- | | TECHNICAL FIELDS SEARCHED (IPC) G06T |

The present search report has been drawn up for all claims

| Place of search | Date of completion of the search | Examiner |
|---|---|---|
| Berlin | 16 June 2022 | Kröner, Sabine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 22 15 0557

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KIM GANG YEON ET AL: "A Reflectance Model for Metallic Paints Using a Two-Layer Structure Surface with Microfacet Distributions", IEICE TRANSACTIONS ON INFORMATION AND SYSTEMS, vol. E93-D, no. 11, 1 January 2010 (2010-01-01), pages 3076-3087, XP055931821, JP ISSN: 0916-8532, DOI: 10.1587/transinf.E93.D.3076 Retrieved from the Internet: URL:https://www.jstage.jst.go.jp/article/transinf/E93.D/11/E93.D_11_3076/_pdf/-char/en> * sections 3, 3.1, 3.2, 4.1, 5.3 * ----- | 1-15 | |
| | | | TECHNICAL FIELDS SEARCHED (IPC) |

The present search report has been drawn up for all claims

| Place of search | Date of completion of the search | Examiner |
|---|---|---|
| Berlin | 16 June 2022 | Kröner, Sabine |

EPO FORM 1503 03.82 (P04C01)

## REFERENCES CITED IN THE DESCRIPTION

**Patent documents cited in the description**

- US 20070097119 A1
- US 20050128484 A1
- EP 3163358 A1
- US 20140152990 A1

**Non-patent literature cited in the description**

- **ROY S. BERNS.** Billmeyer and Saltzman's Principles of Color Technology. Wiley, 2019, 184
- **KWATRA, V. ; SCHODL, A. ; ESSA, I. ; TURK, G. ; BOBICK, A.** Graphcut textures: image and video synthesis using graph cuts. *ACM Transactions on Graphics (ToG),* 2003, vol. 22 (3), 277-286
- **GERO MÜLLER ; JOCHEN TAUTGES ; ALEXANDER GRESS ; MARTIN RUMP ; MAX HERMANN ; FRANCIS LAMY.** *AxF - Appearance exchange Format,* 11 April 2019
- Photorealistic Rendering of Metallic Car Paint from Image-Based Measurements. **MARTIN RUMP ; GERO MÜLLER ; RALF SARLETTE ; DIRK KOCH ; RICHARD KLEIN.** Computer Graphics Forum. Eurographics, April 2008, vol. 27, 527-536
- Efficient Resampling, Compression and Rendering of Metallic and Pearlescent Paint. **MARTIN RUMP ; RALF SARLETTE ; RICHARD KLEIN.** Proceedings of Vision, Modeling, and Visualization. November 2009, 11-18
- A New Change of Variables for Efficient BRDF Representation. **SZYMON M. RUSINKIEWICZ.** Rendering Techniques '98. Eurographics, Springer, 1998
- **SHEPARD, D.** A two-dimensional interpolation function for irregularly-spaced data. *Proceedings of the 1968 23rd ACM national conference,* 1968, 517-524
- Prediction with Gaussian processes: From linear regression to linear prediction and beyond. **WILLIAMS, C.K.** Learning in graphical model. Springer, 1998, 599-621